(19) Europäisches Patentamt
European Patent Office
Office européen des brevets

(11) **EP 4 657 405 A2**

(12) **EUROPEAN PATENT APPLICATION**

(43) Date of publication:
03.12.2025 Bulletin 2025/49

(51) International Patent Classification (IPC):
*G08G 1/00* *(2006.01)*

(21) Application number: 25205321.0

(22) Date of filing: 29.09.2025

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 23.04.2025  CN 202510518842

(71) Applicant: **Beijing Horizon Information
Technology Co., Ltd.
Beijing 100094 (CN)**

(72) Inventor: **YU, Fangchao
Beijing, 100094 (CN)**

(74) Representative: **v. Bezold & Partner
Patentanwälte - PartG mbB
Ridlerstraße 57
80339 München (DE)**

(54) **METHOD AND APPARATUS FOR DISPLAYING EGO VEHICLE, MEDIUM, AND ELECTRONIC DEVICE**

(57)    Disclosed are a method and apparatus for displaying ego vehicle, a medium, and an electronic device. The method includes: determining respective target collision points of ego vehicle and a target obstacle; determining a target observation point based on the respective target collision points; determining a target observation angle of view based on the target observation point; and displaying, based on the target observation angle of view, a three-dimensional image containing the ego vehicle and the target obstacle. With the solution, as it is enabled to determine in real time a best observation angle of view for observing the ego vehicle and a closest obstacle, a real-time case between the ego vehicle and the target obstacle is observed through the best observation angle of view with a greater range of angles of view, and thereby the three-dimensional image of the ego vehicle and the closest obstacle displayed based on the best observation angle of view is enabled to show information on a distance between the ego vehicle and the closest obstacle more intuitively and accurately, to facilitate a reminder enabling the driver to adjust the vehicle in time to avoid a risk of collision of the vehicle due to a blind spot problem, and then improving vehicle driving safety.

```
                                                          ┌─ 201
┌──────────────────────────────────────────────┐
│ Determining respective target collision points of │
│         ego vehicle and a target obstacle          │
└──────────────────────────────────────────────┘
                        │
                        ▼                                 ┌─ 202
┌──────────────────────────────────────────────┐
│ Determining a target observation point based on the │
│          respective target collision points         │
└──────────────────────────────────────────────┘
                        │
                        ▼                                 ┌─ 203
┌──────────────────────────────────────────────┐
│  Determining a target observation angle of view    │
│         based on the target observation point       │
└──────────────────────────────────────────────┘
                        │
                        ▼                                 ┌─ 204
┌──────────────────────────────────────────────┐
│ Displaying, based on the target observation angle   │
│  of view, a three-dimensional image containing the  │
│          ego vehicle and the target obstacle        │
└──────────────────────────────────────────────┘
```

**FIG. 2**

**EP 4 657 405 A2**

**Description**

**TECHNICAL FIELD**

This disclosure relates to field of intelligent driving technology, and more particularly, to a method and apparatus for displaying ego vehicle, a medium, and an electronic device.

**BACKGROUND**

With the continuous development of automotive technology, cars have become more widely used as a daily transportation for people. However, during parking or when driving on a congested road, it becomes increasingly dangerous to drive a vehicle. Therefore, real-time monitoring of the vehicle's driving process is necessary.

In related art, during the parking process of the vehicle, images of environment around the vehicle may be acquired by multiple fisheye cameras installed on a rear side of the vehicle, the acquired two-dimensional images may be spliced, and an image obtained by the splicing may be displayed, to facilitate the driver observing real-time environment around the vehicle. However, as the installed cameras are limited in number, there may be a blind spot problem, leading to a risk of collision of the vehicle with an obstacle in the parking process.

Thus, how to solve the blind spot problem in the parking process has become a technical problem pressing for a solution.

**SUMMARY**

To solve the above technical problem, this disclosure provides a method and apparatus for displaying ego vehicle, a medium, and an electronic device, to solve the blind spot problem in the parking process, then improving vehicle safety.

One aspect provides a method for displaying ego vehicle, including:

determining respective target collision points of ego vehicle and a target obstacle;
determining a target observation point based on the respective target collision points;
determining a target observation angle of view based on the target observation point; and
displaying, based on the target observation angle of view, a three-dimensional image containing the ego vehicle and the target obstacle.

Another aspect provides an apparatus for displaying ego vehicle, including:

a first determining module, configured for determining respective target collision points of ego vehicle and a target obstacle;
a second determining module, configured for determining a target observation point based on the respective target collision points;
a third determining module, configured for determining a target observation angle of view based on the target observation point; and
an image displaying module, configured for displaying, based on the target observation angle of view, a three-dimensional image containing the ego vehicle and the target obstacle.

Yet another aspect proposes a computer program product. When instructions in the computer program product are executed by a processor, the method for displaying ego vehicle according to the first aspect of this disclosure is performed.

Still another aspect proposes an electronic device, including: a processor; and a memory configured for storing processor-executable instructions, wherein the processor is configured for reading and executing the processor-executable instructions in the memory to implement the method for displaying ego vehicle according to the first aspect.

Embodiments of this disclosure provide a method for displaying ego vehicle, capable of determining respective target collision points of ego vehicle and a target obstacle; determining a target observation point based on the respective target collision points; determining a target observation angle of view based on the target observation point; and therefore displaying, based on the target observation angle of view, a three-dimensional image containing the ego vehicle and the target obstacle. With embodiments of this disclosure the solution, as it is enabled to determine in real time a best observation angle of view for observing the ego vehicle and a closest obstacle, a real-time case between the ego vehicle and the target obstacle is observed through the best observation angle of view with a greater range of angles of view, and thereby the three-dimensional image of the ego vehicle and the closest obstacle displayed based on the best observation angle of view is enabled to show information on a distance between the ego vehicle and the closest obstacle more intuitively and accurately, to facilitate a reminder enabling the driver to adjust the vehicle in time to avoid a risk of collision of the vehicle due to a blind spot problem, and then improving vehicle driving safety.

## BRIEF DESCRIPTION OF DRAWINGS

FIG. 1 is a diagram of architecture of a system for displaying ego vehicle according to an illustrative embodiment of this disclosure.
FIG. 2 is a flowchart of a method for displaying ego vehicle according to an illustrative embodiment of this disclosure.
FIG. 3 is a flowchart of a method for displaying ego vehicle according to another illustrative embodiment of this disclosure.
FIG. 4 is a diagram of ego vehicle and an obstacle according to an illustrative embodiment of this disclosure.
FIG. 5 is a diagram of a relation between collision points according to an illustrative embodiment of this disclosure.
FIG. 6 is a flowchart of a method for displaying ego vehicle according to yet another illustrative embodiment this disclosure.
FIG. 7 is a flowchart of a method for displaying ego vehicle according to still another illustrative embodiment of this disclosure.
FIG. 8 is a diagram of a relation between collision points according to another illustrative embodiment of this disclosure.
FIG. 9 is a flowchart of a method for displaying ego vehicle according to an illustrative embodiment of this disclosure.
FIG. 10 is a diagram of an observation space according to an illustrative embodiment of this disclosure.
FIG. 11 is a diagram of determining a field-of-view performance parameter of an observation angle of view according to an illustrative embodiment of this disclosure.
FIG. 12 is a diagram of determining a to-be-selected observation angle of view according to an illustrative embodiment of this disclosure.
FIG. 13 is a flowchart of a method for displaying ego vehicle according to an illustrative embodiment of this disclosure.
FIG. 14 is a flowchart of a method for displaying ego vehicle according to an illustrative embodiment of this disclosure.
FIG. 15 is a flowchart of a method for displaying ego vehicle according to an illustrative embodiment of this disclosure.
FIG. 16 is a diagram of a structure of an apparatus for displaying ego vehicle according to an illustrative embodiment of this disclosure.
FIG. 17 is a diagram of a structure of an electronic device according to an illustrative embodiment of this disclosure.

## DETAILED DESCRIPTION OF THE EMBODIMENTS

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.
It should be noted that unless otherwise specified, the scope of this disclosure is not limited to relative arrangements, numeric expressions, and numerical values of components and steps described in these embodiments.

Disclosure overview

In existing reversing technology, a reversing image may be observed through a 360 degree surround view system. The reversing image is obtained by splicing two-dimensional images. However, as cameras (such as fisheye cameras) installed on a rear side of a vehicle are limited in number, there may be a blind spot problem in the presented reversing image, thereby making the driver overlook a risk of collision of the vehicle with an obstacle.
Based on the technical problem as described above, embodiments of this disclosure provide a method for displaying ego vehicle, capable of determining respective target collision points of ego vehicle and a target obstacle; determining a target observation point based on the respective target collision points; determining a target observation angle of view based on the target observation point; and therefore displaying, based on the target observation angle of view, a three-dimensional image containing the ego vehicle and the target obstacle. With embodiments of this disclosure the solution, as it is enabled to determine in real time a best observation angle of view for observing the ego vehicle and a closest obstacle, a real-time case between the ego vehicle and the target obstacle is observed through the best observation angle of view with a greater range of angles of view, and thereby the three-dimensional image of the ego vehicle and the closest obstacle displayed based on the best observation angle of view is enabled to show information on a distance between the ego vehicle and the closest obstacle more intuitively and accurately, to facilitate a reminder enabling the driver to adjust the vehicle in time to avoid a risk of collision of the vehicle due to a blind spot problem, and then improving vehicle driving safety.

Illustrative system

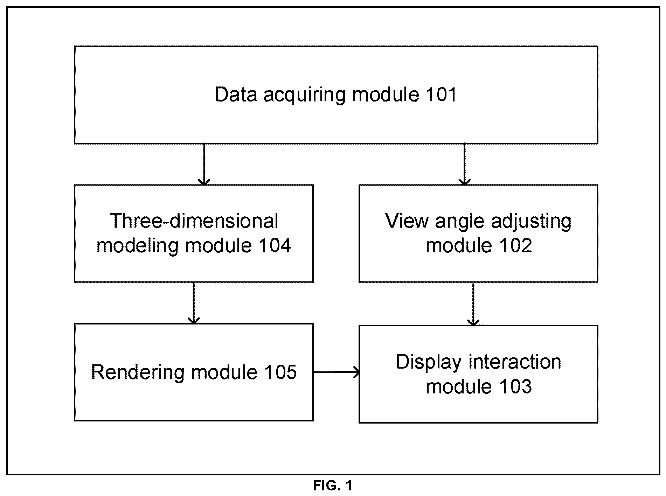

FIG. 1 is a diagram of architecture of a system for displaying ego vehicle according to an illustrative embodiment of this disclosure. The system for displaying ego vehicle may include a data acquiring module 101, a view angle adjusting module 102, and a display interaction module 103, connected with each other through solid lines with arrows representing directions in which data flow. The 3 modules illustrated below.

As shown in FIG. 1, the data acquiring module 101 may be configured for acquiring, in real time, image data of the surround of the ego vehicle through a plurality of cameras of different angles of view located external to the ego vehicle to obtain a plurality of images, and acquiring, in real time, environmental data on an environment around the ego vehicle through another sensor (such as ultrasonic radar).

In some embodiments, the ego vehicle, at least one obstacle around the ego vehicle, and a relative spatial position relation between the ego vehicle and a respective obstacle may be determined based on the plurality of images and the environmental data; then the target obstacle in the at least one obstacle may be determined based on the relative spatial position relation between the ego vehicle and the respective obstacle, and the respective target collision points of the ego vehicle and the target obstacle may be determined.

For example, the target obstacle is an obstacle closest to the ego vehicle in the at least one obstacle.

Illustratively, the view angle adjusting module 102 may be configured for determining the target observation point based on the respective target collision points of the ego vehicle and the target obstacle, and determining the target observation angle of view based on the target observation point.

Illustratively, the display interaction module 103 may be configured for displaying, based on the target observation angle of view, the three-dimensional image containing the ego vehicle and the target obstacle.

In some examples, the display interaction module 103 may be specifically configured for displaying, based on the target observation angle of view, the three-dimensional image containing the ego vehicle and the target obstacle in a bubble mode when the ego vehicle meets a warning level.

In some other examples, the display interaction module 103 may further be configured for highlighting the three-dimensional image of the target obstacle performing, and may further display information prompting a distance between the ego vehicle and the target obstacle, etc.

In some embodiments, in displaying, based on the target observation angle of view, the three-dimensional image containing the ego vehicle and the target obstacle, the display interaction module 103 displays the three-dimensional image containing the ego vehicle and the target obstacle with the range of angles of view and a visual focus which correspond to the target observation angle of view.

In some embodiments, as shown in FIG. 1, the system for displaying ego vehicle as described above may further include a three-dimensional modeling module 104 and a rendering module 105.

Illustratively, the three-dimensional modeling module 104 may be configured for constructing a three-dimensional model of the environment around the ego vehicle in real time combining the plurality of images and the environmental data using a simultaneous localization and mapping SLAM algorithm; extracting key feature points in the acquired plurality of images based on a deep learning algorithm; generating, by triangulation using the key feature points, a sparse three-dimensional point cloud; and then reconstructing three-dimensional point cloud data to obtain the three-dimensional image of the ego vehicle and the target obstacle.

Illustratively, the rendering module 105 may be configured for rendering the three-dimensional image of the ego vehicle and the target obstacle in real time when the three-dimensional modeling module 104 performs three-dimensional modeling based on the plurality of images and the environmental data.

Embodiments of this disclosure provide a method for displaying ego vehicle, capable of determining respective target collision points of ego vehicle and a target obstacle; determining a target observation point based on the respective target collision points; determining a target observation angle of view based on the target observation point; and therefore displaying, based on the target observation angle of view, a three-dimensional image containing the ego vehicle and the target obstacle. With embodiments of this disclosure the solution, as it is enabled to determine in real time a best observation angle of view for observing the ego vehicle and a closest obstacle, a real-time case between the ego vehicle and the target obstacle is observed through the best observation angle of view with a greater range of angles of view, and thereby the three-dimensional image of the ego vehicle and the closest obstacle displayed based on the best observation angle of view is enabled to show information on a distance between the ego vehicle and the closest obstacle more intuitively and accurately, to facilitate a reminder enabling the driver to adjust the vehicle in time to avoid a risk of collision of the vehicle due to a blind spot problem, and then improving vehicle driving safety.

Illustrative method

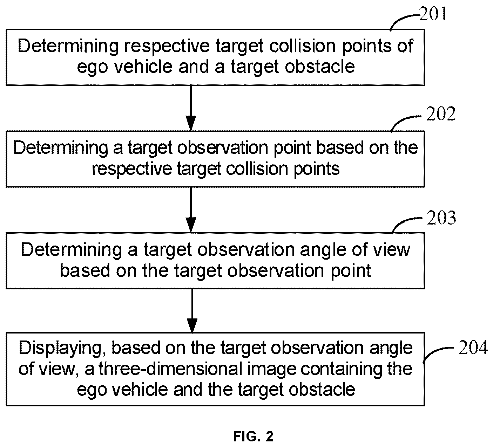

FIG. 2 is a flowchart of a method for displaying ego vehicle according to an illustrative embodiment of this disclosure. This embodiment is applicable to an electronic device, and as shown in FIG. 2, includes steps as follows.

Step 201, Determining respective target collision points of ego vehicle and a target obstacle

In some embodiments, it may be detected whether there is an obstacle in a preset range around the ego vehicle, and when there is at least one obstacle around the ego vehicle, the target obstacle may be any one of the at least one obstacle, or a specific one of the at least one obstacle, wherein for example the target obstacle is an obstacle closest to the ego vehicle in the at least one obstacle.

In some embodiments, the target collision point refers to position points of the ego vehicle and the target obstacle in contact with each other when there is a danger of collision between the ego vehicle and the target obstacle.

In determining the respective target collision points of the ego vehicle and the target obstacle, first, the ego vehicle and the target obstacle may be converted into corresponding polygons, respectively, then, respective points on the two polygons closest to each other may be computed, and thereby the two closest points may be determined to be the corresponding target collision points, respectively. For elaboration of the respective target collision points of the ego vehicle and the target obstacle, one may refer to elaboration in an embodiment below, which is not repeated here in embodiments of this disclosure.

The method for displaying ego vehicle according to embodiments of this disclosure is applicable to a scene where high precision environment perception is required, such as an intelligent car, an autonomous driving parking system, or a logistics vehicle, etc.

Step 202, Determining a target observation point based on the respective target collision points

In some embodiments, the target observation point is a point between the respective target collision points of the ego vehicle and the target obstacle, configured for reflecting specifics of the risk of collision between the ego vehicle and the target obstacle.

In some examples, the target observation point may be determined based on a geometric position relation between the respective target collision points of the ego vehicle and the target obstacle.

Step 203, Determining a target observation angle of view based on the target observation point

In embodiments of this disclosure, the target observation angle of view as described above faces the target observation point, for observing the ego vehicle and the target obstacle near the target observation point. As the target observation angle of view is determined based on the target observation point, different target observation points correspond to different target observation angles of view.

Step 204, Displaying, based on the target observation angle of view, a three-dimensional image containing the ego vehicle and the target obstacle

In some embodiments, the plurality of images at a current moment and current environment information may be obtained, the plurality of images and the current environment information including the target obstacle; three-dimensional modeling and real-time rendering may be performed based on the plurality of images and the current environment information, to obtain the three-dimensional image of the ego vehicle and the target obstacle; and then, the three-dimensional image containing the ego vehicle and the target obstacle may be displayed based on the target observation angle of view.

As the target observation angle of view is determined in real time based on information related to the ego vehicle and a relative position relation between an obstacle around the ego vehicle and the ego vehicle, while the ego vehicle drives, as the position relation between the obstacle around the ego vehicle and the ego vehicle changes, the target obstacle determined may differ, and then the respective target collision points of the ego vehicle and the target obstacle determined may differ, thereby making the target observation angle of view obtained in real time also differ. Thus, the target observation angle of view according to embodiments of this disclosure is adjusted dynamically.

Embodiments of this disclosure provide a method for displaying ego vehicle, capable of determining respective target collision points of ego vehicle and a target obstacle; determining a target observation point based on the respective target collision points; determining a target observation angle of view based on the target observation point; and therefore displaying, based on the target observation angle of view, a three-dimensional image containing the ego vehicle and the target obstacle. With embodiments of this disclosure the solution, as it is enabled to determine in real time a best observation angle of view for observing the ego vehicle and a closest obstacle, a real-time case between the ego vehicle and the target obstacle is observed through the best observation angle of view with a greater range of angles of view, and thereby the three-dimensional image of the ego vehicle and the closest obstacle displayed based on the best observation angle of view is enabled to show information on a distance between the ego vehicle and the closest obstacle more intuitively and accurately, to facilitate a reminder enabling the driver to adjust the vehicle in time to avoid a risk of collision of the vehicle due to a blind spot problem, and then improving vehicle driving safety.

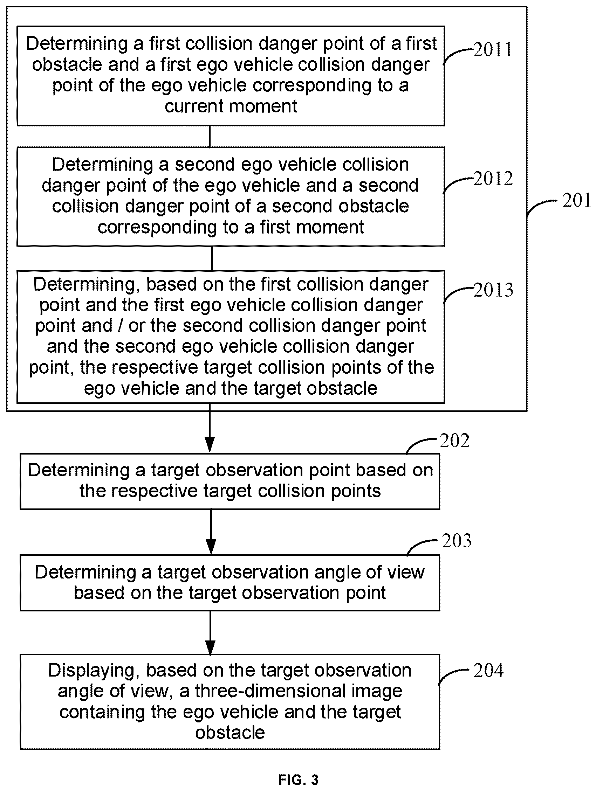

As shown in FIG. 3, based on the embodiment shown in FIG. 2, step 201 may include steps as follows.

Step 2011, Determining a first collision danger point of a first obstacle and a first ego vehicle collision danger point of the ego vehicle corresponding to a current moment

The first obstacle is an obstacle closest to the ego vehicle in a plurality of obstacles at the current moment.

In some embodiments, image data of the surround of the ego vehicle may be acquired in real time through a plurality of cameras of different angles of view to obtain a plurality of images corresponding to the current moment; information on the current environment around the ego vehicle may be acquired through a sensor such as a radar, etc.; based on the plurality of images and the current environment information, it may be determined that a certain range near the ego vehicle includes a plurality of obstacles and distances between the obstacles and the ego vehicle may be determined; and thereby, the obstacle closest to the ego vehicle in the plurality of obstacles may be selected to be the first obstacle based on the distances between the obstacles and the ego vehicle.

In some embodiments, in computing collision danger points of the ego vehicle and any one obstacle in a certain range near the ego vehicle, first, the ego vehicle and the obstacle may be converted into respective geometric shapes based on types of the ego vehicle and the obstacle; and then, the respective target collision points of the ego vehicle and the obstacle may be determined based on features of the respective geometric shapes and a collision detecting algorithm.

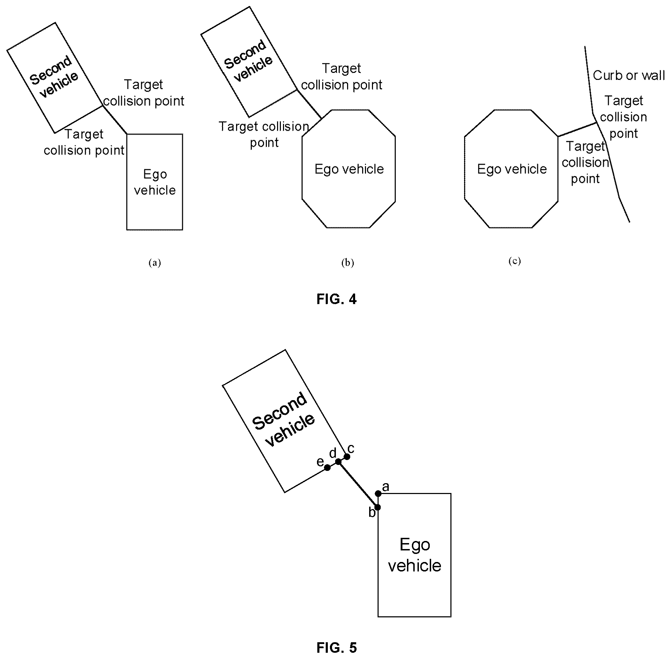

Illustratively, the ego vehicle as shown in FIG. 4, (a) may be converted into a quadrilateral representation based on a vehicle model, and the ego vehicle as shown in FIG. 4, (b) and (c) may be converted into an octagon representation based on the vehicle model. Different types of obstacles may be converted into different geometric shape representations, wherein for example, as shown in FIG. 4, (a) and (b), when the obstacle is a second vehicle or a pillar, the obstacle may be converted into the quadrilateral representation, and as another example, as shown in FIG. 4, (c), the obstacle is a curb or a wall having a height, in which case the obstacle may be represented by multiple line segments.

In an example, illustration is made taking the first obstacle being a second vehicle as an example. The ego vehicle is converted into the quadrilateral representation, and the second vehicle is converted into the quadrilateral representation. A shortest distance between the two quadrilaterals is computed, and when the shortest distance is less than a safe threshold, it means that there is a risk of collision of the ego vehicle with the second vehicle. A point of intersection where the shortest distance intersects with the quadrilateral corresponding to the ego vehicle and a point of intersection where the shortest distance intersects with the quadrilateral corresponding to the second vehicle may be determined. Thereby, the point of intersection with the quadrilateral corresponding to the ego vehicle may be set to be a first ego vehicle collision danger collision point of the ego vehicle, and the point of intersection with the quadrilateral corresponding to the second vehicle may be set to be a first collision danger collision point of the second vehicle.

In another example, illustration is made taking as an example that the first obstacle is a curb having a height. The ego vehicle is converted into the octagon representation, and the curb is converted into a multi-segment representation. A shortest distance between the octagon and the multiple segments is computed, and when the shortest distance is less than the safe threshold, it means that there is a risk of collision of the ego vehicle with the curb. A point of intersection where the shortest distance intersects with the octagon corresponding to the ego vehicle and a point of intersection where the shortest distance intersects with the multiple segments corresponding to the curb may be determined. Thereby, the point of intersection with the octagon corresponding to the ego vehicle may be set to be the first ego vehicle collision danger collision point of the ego vehicle, and the point of intersection with the multiple segments corresponding to the curb may be set to be a first collision danger collision point of the curb.

Step 2012, Determining a second ego vehicle collision danger point of the ego vehicle and a second collision danger point of a second obstacle corresponding to a first moment

The first moment is a preceding moment of the current moment, and the second obstacle is an obstacle closest to the ego vehicle in a plurality of obstacles at the first moment.

In some embodiments, the second obstacle may or may not be the first obstacle. For determination of the second obstacle, one may refer to elaboration of determination of the first obstacle in the embodiment as described above, which is not repeated here in embodiments of this disclosure.

In some embodiments, the second obstacle is the obstacle closest to the ego vehicle at the first moment, and the second ego vehicle collision danger point is the target collision point of the ego vehicle corresponding to the preceding moment determined based on the ego vehicle and the second obstacle. For a mode of determining the second ego vehicle collision danger point, one may refer to elaboration of determination of the first ego vehicle danger collision point in the embodiment as described above, which is not repeated here in embodiments of this disclosure. In addition, as the second ego vehicle collision danger point is the target collision point of the ego vehicle corresponding to the preceding moment determined based on the ego vehicle and the second obstacle, the second collision danger point is known, and may be obtained directly.

In some embodiments, in computing the second collision danger point of the second obstacle, first, the second obstacle may be converted into a respective geometric shape, then, a plurality of points of a side on the geometric shape close to the ego vehicle may be determined, and straight line distances between the respective points and the second ego vehicle collision danger point may be computed, wherein a point of a shortest straight line distance may be set to be the second collision danger point of the second obstacle.

Illustratively, take the second obstacle being a second vehicle as an example. As shown in FIG. 5, point a represents the first ego vehicle collision danger collision point of the ego vehicle corresponding to the current moment, and point b represents the second ego vehicle collision danger point of the ego vehicle corresponding to the first moment. The second vehicle is converted into the quadrilateral representation, and a candidate collision point of a side on the quadrilateral corresponding to the second vehicle which is close to the ego vehicle is determined, wherein the candidate collision point includes a point c, a point d, and a point e. Respective distances from the point c, point d, and point e to the second ego vehicle collision danger point b may be computed. As the respective distances from point c and point e to point b are each greater than the distance between point d and point b, point d may be set to be the second collision danger point of the second vehicle. Of course, the process as described above is illustrated taking selecting the second collision danger point from 3 points as an example, and in actual implementation, a point closest to the second ego vehicle collision danger point may be selected from more points and set to be the second collision danger point.

Step 2013, Determining, based on the first collision danger point and the first ego vehicle collision danger point and / or the second collision danger point and the second ego vehicle collision danger point, the respective target collision points of the ego vehicle and the target obstacle

In embodiments of this disclosure, to guarantee smooth transition in switching between different observation angle of view to avoid a phenomenon of frequent switching, in determining the respective target collision points of the ego vehicle and the obstacle, smooth transition is to be performed, which includes two cases as follows.

(1) The target obstacle corresponding to the current moment is not the target obstacle corresponding to the preceding moment, in which case switching between the different target obstacles is smoothed.

(2) The target obstacle corresponding to the current moment is the target obstacle corresponding to the preceding moment, in which case switching between different collision points of the same target obstacle is smoothed.

In some embodiments, a matching relation between the first obstacle and the second obstacle may be determined, and the respective target collision points of ego vehicle and the target obstacle may be determined based on the first collision danger point and the first ego vehicle collision danger point and / or the second collision danger point and the second ego vehicle collision danger point by combining a mode of smooth transition and the matching relation.

In some examples, the target collision point of the ego vehicle may be the first ego vehicle collision danger point or the second ego vehicle collision danger point, and the target collision point of the target obstacle may be the first collision danger point or the second collision danger point.

With the method for displaying ego vehicle according to embodiments of this disclosure, as it is enabled to determine the first collision danger point of the first obstacle and the first ego vehicle collision danger point of the ego vehicle corresponding to the current moment, and determine the second ego vehicle collision danger point of the ego vehicle and the second collision danger point of the second obstacle corresponding to the first moment, by combining the second ego vehicle collision danger point of the ego vehicle corresponding to the preceding moment and the corresponding second collision danger point, as well as the first collision danger point and the first ego vehicle collision danger point, it is enabled to ensure that the obtained respective target collision points of the ego vehicle and the target obstacle is more stable, which therefore enables to ensure smooth switching between observation angles of view at different moments.

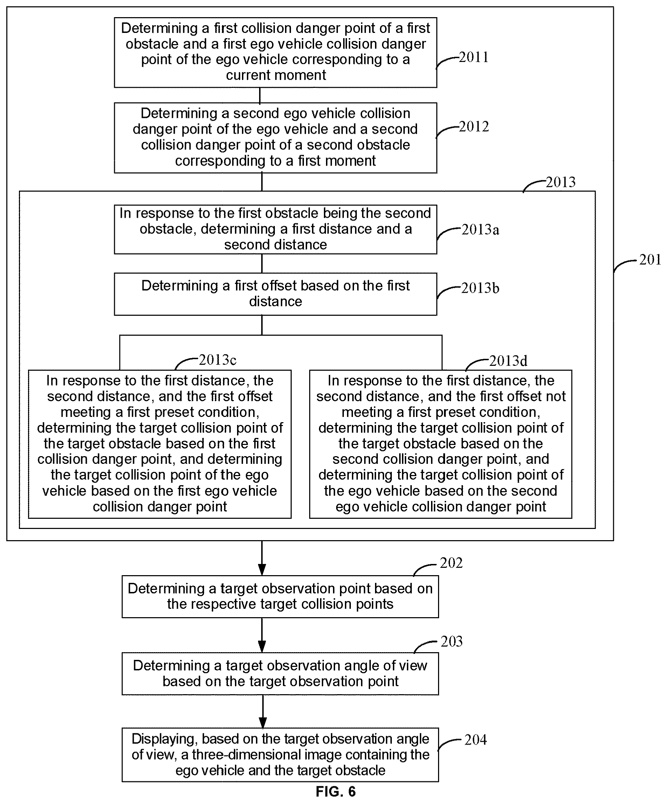

As shown in FIG. 6, based on the embodiment shown in FIG. 3, step 2013 may include steps as follows.

Step 2013a, In response to the first obstacle being the second obstacle, determining a first distance and a second distance

The first distance is a distance between the second ego vehicle collision danger point and the second obstacle at the preceding moment, and the second distance is a distance between the first ego vehicle collision danger point and the first obstacle at the current moment.

In some embodiments, in computing the first distance between the second ego vehicle collision danger point and the second obstacle, first, the second obstacle is to be converted into a respective geometric shape, and then a minimum distance between the second ego vehicle collision danger point and the geometric shape is to be computed and set to be the first distance. That is, a point on the geometric shape closest to the second ego vehicle collision danger point is to be found, and the closest point is the second collision danger point. Therefore, the first distance is the distance between the second ego vehicle collision danger point and the second collision danger point. Thereby, the first distance may be computed based on the coordinate of the second ego vehicle collision danger point and the coordinate of the second collision danger point.

Illustratively, when the first obstacle is the second obstacle, as shown in FIG. 5, second vehicle 1 is the first obstacle closest to the ego vehicle at the current moment, and second vehicle 1 is also the second obstacle closest to the ego vehicle at the preceding moment; the first ego vehicle collision danger point of the ego vehicle corresponding to the current moment is point a, the first collision point of second vehicle 1 corresponding to the current moment is the point c, the second ego vehicle collision danger point of the ego vehicle corresponding to the preceding moment is point b, and the second collision danger point of second vehicle 1 corresponding to point b is point d. The first distance is obtained by computing the distance between point b and point d; and the second distance is obtained by computing the distance between point c and point a.

In an example, take the second obstacle being a second vehicle as an example. When the first obstacle is the second obstacle, as shown in FIG. 5, in the same coordinate system, the second ego vehicle collision danger point of the ego vehicle corresponding to the preceding moment is point b $(X_1, Y_1)$, the corresponding second collision danger point of the second vehicle is d $(X_2, Y_2)$, the distance between point b and point d is the first distance, the first distance is denoted by $D_1$, and $D_1$ may be computed through Formula (1) as follows:

$$D_1 = \sqrt{(X_2 - X_1)^2 + (Y_2 - Y_1)^2} \quad (1)$$

In some embodiments, the distance between the first ego vehicle collision danger point and the first obstacle is the distance between the closest points of two polygons corresponding respectively to the ego vehicle and the first obstacle. The first ego vehicle collision danger point and the first collision danger point of the first obstacle are the respective points of the ego vehicle and the first obstacle closest to each other. Therefore, the second distance may actually be obtained by computing the distance between the first ego vehicle collision danger point and the first collision danger point. After the coordinates of the first ego vehicle collision danger point and the first collision danger point have been determined, the second distance may be computed based on the coordinate of the first ego vehicle collision danger point and the coordinate of the first collision danger point based on Formula (1) as described above.

Step 2013b, Determining a first offset based on the first distance

In some examples, the first offset is computed based on Formula (2) as follows, wherein the first offset is denoted by offset1:

$$\text{offset} = \begin{cases} 0.24, \text{dis\_last} > 1.0 \\ 0.3 * (\text{dis\_last} - 0.2), 0.2 \leq \text{dis\_last} \leq 1.0 \\ 0, \text{dis\_last} < 0.2 \end{cases} \quad (2)$$

Offset1 may obtained by putting the first distance in Formula (2) as dis_last.

Step 2013c, In response to the first distance, the second distance, and the first offset meeting a first preset condition, determining the target collision point of the target obstacle based on the first collision danger point, and determining the target collision point of the ego vehicle based on the first ego vehicle collision danger point

In some examples, the first distance, the second distance, and the first offset meeting a first preset condition refers to that the second distance is less than or equal to the first distance and is greater than the first offset.

In some embodiments, the first collision danger point is determined to be the target collision point of the target obstacle, and the first ego vehicle collision danger point is determined to be the target collision point of the ego vehicle.

Illustratively, as shown in FIG. 5, if the second distance between point c and point a is less than or equal to the first distance between point d and point b and is greater than the second offset, point a may be determined to be the target collision point of the ego vehicle, and point c may be determined to be the target collision point of the target obstacle.

Step 2013d, In response to the first distance, the second distance, and the first offset not meeting a first preset condition, determining the target collision point of the target obstacle based on the second collision danger point, and determining the target collision point of the ego vehicle based on the second ego vehicle collision danger point.

In some examples, the first distance, the second distance, and the first offset not meeting a first preset condition refers to that the second distance is greater than the first distance, or that the second distance is less than or equal to the first offset.

In some embodiments, the second collision danger point is determined to be the target collision point of the target obstacle, and the second ego vehicle collision danger point is determined to be the target collision point of the ego vehicle.

Illustratively, as shown in FIG. 5, if the first distance between point c and point a is greater than the second distance between point g and point f, or if the first distance between point c and point a is less than or equal to the second offset, point b is determined to be the target collision point of the ego vehicle, and point d is determined to be the target collision point of the target obstacle.

Note that the first obstacle being the second obstacle refers to that the target obstacle is the same obstacle no matter whether the first distance, the second distance, and the first offset meet the first preset condition, that is, the target obstacle is the first obstacle or the second obstacle.

With the method for displaying ego vehicle according to embodiments of this disclosure, when the first obstacle closest to the ego vehicle at the current moment is the second obstacle closest to the ego vehicle at the preceding moment, by combining a historical collision point and a real-time collision point, smooth switching between different target collision points of the same obstacle is enabled, which therefore enables to guarantee subsequent smooth transition of target observation angles of view, thereby avoiding a sudden change in the observation angle of view.

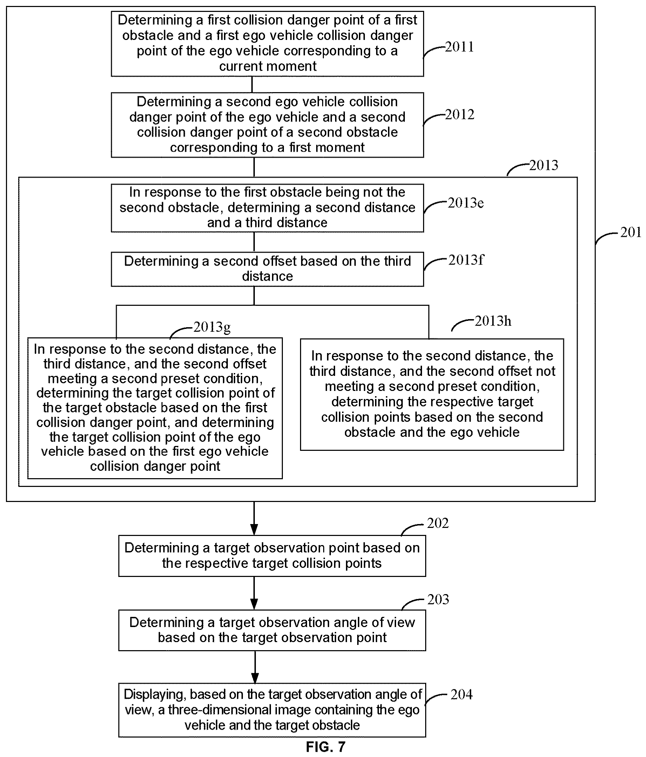

As shown in FIG. 7, based on the embodiment shown in FIG. 3, step 2013 may include steps as follows.

Step 2013e, In response to the first obstacle being not the second obstacle, determining a second distance and a third distance

The second distance is a distance between the ego vehicle and the first obstacle at the current moment, and the third distance is a distance between the ego vehicle and the second obstacle at the current moment.

When the first obstacle is not the second obstacle, a mode of computing the second distance is the same, for which one may refer to description relating to the second distance in the embodiment as described above, which is not repeated here in embodiments of this disclosure.

In some embodiments, the third distance is a distance between the ego vehicle and the second obstacle at the current moment, that is, the minimum distance between polygons corresponding respectively to the ego vehicle and the second obstacle. The minimum distance between the two polygons may be computed by first determining respective closest points of the two polygons, and then computing the distance between the two closest points, for which one may specifically refer to related description in the embodiment as described above, which is not repeated here in embodiments of this disclosure.

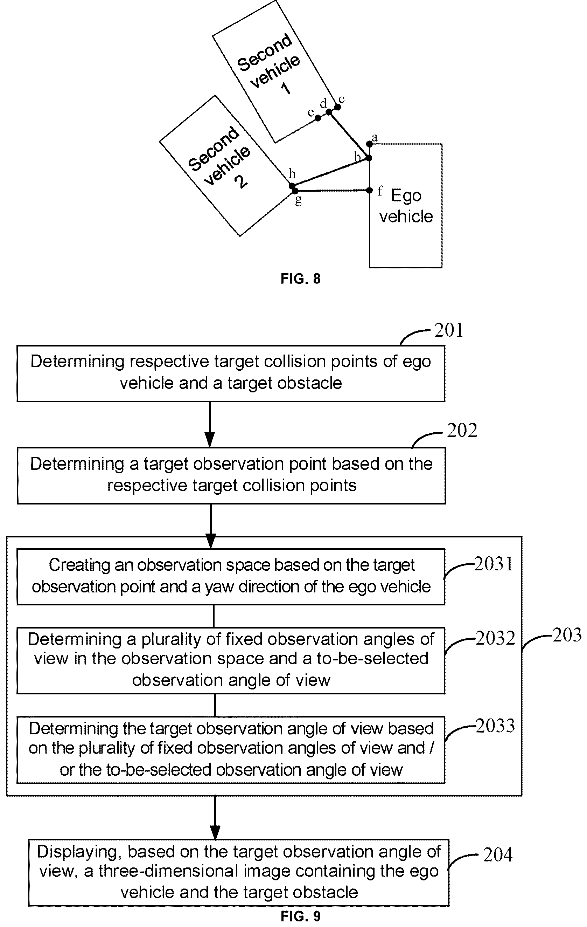

Illustratively, when the first obstacle is not the second obstacle, as shown in FIG. 8, second vehicle 1 is the first obstacle closest to the ego vehicle at the current moment; second vehicle 2 is the second obstacle closest to the ego vehicle at the preceding moment; the first ego vehicle collision danger point of the ego vehicle corresponding to the current moment is point a, the first collision point of second vehicle 1 corresponding to the current moment is point c, and respective closest points of the ego vehicle and second vehicle 2 are point f and point g, respectively. The second distance may be obtained by computing the distance between point c and point a, and the third distance may be obtained by computing the distance between point g and point f.

Step 2013f, Determining a second offset based on the third distance

In some examples, the second offset offset2 may be obtained by putting the third distance in Formula (2) as dis_last.

Step 2013g, In response to the second distance, the third distance, and the second offset meeting a second preset condition, determining the target collision point of the target obstacle based on the first collision danger point, and determining the target collision point of the ego vehicle based on the first ego vehicle collision danger point

In some examples, the second distance, the third distance, and the second offset meeting a second preset condition refers to that the second distance is less than or equal to the third distance and is greater than the second offset.

In some embodiments, the first collision danger point is determined to be the target collision point of the target obstacle, and the first ego vehicle collision danger point is determined to be the target collision point of the ego vehicle. Note that in this case the target obstacle is still the first obstacle.

Illustratively, as shown in FIG. 8, if the first distance between point c and point a is less than or equal to the third distance between point g and point f and is greater than the second offset, point a may be determined to be the target collision point of the ego vehicle, and point c may be determined to be the target collision point of the target obstacle.

Step 2013h, In response to the second distance, the third distance, and the second offset not meeting a second preset condition, determining the respective target collision points based on the second obstacle and the ego vehicle

The second obstacle is the target obstacle.

In some examples, the second distance, the third distance, and the second offset not meeting a second preset condition refers to that the second distance is greater than the third distance, or that the second distance is less than or equal to the second offset.

In some embodiments, when the second distance, the third distance, and the second offset do not meet the second preset condition, the second obstacle is determined to be the obstacle closest to the ego vehicle at the current moment, that is, the second obstacle is the target obstacle corresponding to the current moment. Therefore, the respective target collision points of the ego vehicle and the second obstacle are to be determined again based on a relative position relation between the second obstacle and the ego vehicle.

With the method for displaying ego vehicle according to embodiments of this disclosure, when the first obstacle is not the second obstacle, it is enabled to determine whether the second distance, the third distance, and the second offset computed meet the second preset condition; and when the second distance, the third distance, and the second offset meet the second preset condition, determine the target collision point of the target obstacle based on the first collision danger point, and determine the target collision point of the ego vehicle based on the first ego vehicle collision danger point; or when the second distance, the third distance, and the second offset do not meet the second preset condition, determine the respective target collision points of the ego vehicle and the second obstacle again based on the second obstacle and the ego vehicle. Therefore, smooth switching between different target obstacles is enabled.

In some embodiments, in step 2013h, the determining the respective target collision points based on the second obstacle and the ego vehicle may specifically include steps as follows.

(1) Determining a fourth distance and a fifth distance

The fourth distance is a distance between the second ego vehicle collision danger point and the second obstacle at the preceding moment, and the fifth distance is the distance between the ego vehicle and the second obstacle at the current moment.

In some embodiments, the distance between the second ego vehicle collision danger point and the second obstacle at the preceding moment is the shortest distance between the second ego vehicle collision danger point and the polygon corresponding to the second obstacle. Specifically, a point on the polygon corresponding to the second obstacle closest to the second ego vehicle collision danger point may be found, and then the fourth distance may be obtained by computing the distance between the second ego vehicle collision danger point and the point closest to the second ego vehicle collision danger point.

In some embodiments, the distance between the ego vehicle and the second obstacle is the closest distance between polygons corresponding respectively to the ego vehicle and the second obstacle, wherein for the closest distance between the two polygons, one may refer to elaboration in the embodiment as described above, which is not repeated here in embodiments of this disclosure.

(2) Determining a third offset based on the fourth distance

In some examples, the third offset offset3 may be obtained by putting the fourth distance in Formula (2) as dis_last.

(3) In response to the fourth distance, the fifth distance, and the third offset meeting a third preset condition, determining a third ego vehicle collision danger point of the ego vehicle and a third collision danger point of the second obstacle at the current moment

In some examples, the fourth distance, the fifth distance, and the third offset meeting a third preset condition refers to that the fifth distance is less than or equal to the fourth distance and is greater than the third offset.

In some examples, the third ego vehicle collision danger point of the ego vehicle and the third collision danger point of the second obstacle are respective collision danger points of the ego vehicle and the second obstacle corresponding to the fifth distance, that is, the distance between the third ego vehicle collision danger point and the third collision danger point is the fifth distance. For the mode of determining the third ego vehicle collision danger point and the third collision danger point, one may refer to elaboration in the embodiment as described above, which is not repeated here in embodiments of this disclosure.

(4) Determining the target collision point of the target obstacle based on the third collision danger point, and determining the target collision point of the ego vehicle based on the third ego vehicle collision danger point

In some embodiments, the third collision danger point is determined to be the target collision point of the target obstacle, and the third ego vehicle collision danger point is determined to be the target collision point of the ego vehicle.

Illustratively, as shown in FIG. 8, second vehicle 2 is the second obstacle closest to the ego vehicle at the preceding moment. When second vehicle 2 is set to be the target obstacle, point g on second vehicle 2 is the third collision danger point, point f on the ego vehicle is the third ego vehicle collision danger point, point b on the ego vehicle is the second ego vehicle collision danger point, and point h on second vehicle 2 is the closest point corresponding to the second ego vehicle collision danger point. If the fifth distance between point g and point f is less than or equal to the fourth distance between point b and point h and is greater than the third offset, point g is determined to be the target collision point of second vehicle 2, and point f is determined to be the target collision point of the ego vehicle.

In some embodiments, the method for displaying ego vehicle according to embodiments of this disclosure may further include: in response to the fourth distance, the fifth distance, and the third offset not meeting the third preset condition, determining a fourth collision danger point of the second obstacle corresponding to the second ego vehicle collision danger point at the current moment; and determining the target collision point of the target obstacle based on the fourth collision danger point, and determining the target collision point of the ego vehicle based on the second ego vehicle collision danger point.

In some examples, the fourth distance, the fifth distance, and the third offset not meeting the third preset condition refers to that the fifth distance is greater than the fourth distance, or that the fifth distance is less than or equal to the third offset.

In some embodiments, the distance between the second ego vehicle collision danger point and the fourth collision danger point is the fourth distance. Therefore, the fourth collision danger point may be determined based on the fourth distance and the second ego vehicle collision danger point. Specifically, the point on the polygon corresponding to the second obstacle closest to the second ego vehicle collision danger point may be found, and then the point closest to the second ego vehicle collision danger point may be determined to be the fourth collision danger point.

In some embodiments, the fourth collision danger point is determined to be the target collision point of the target obstacle, and the second ego vehicle collision danger point is determined to be the target collision point of the ego vehicle.

Illustratively, as shown in FIG. 8, second vehicle 2 is the second obstacle closest to the ego vehicle at the preceding moment. When second vehicle 2 is set to be the target obstacle, point g on second vehicle 2 is the third collision danger point, point f on the ego vehicle is the third ego vehicle collision danger point, point b on the ego vehicle is the second ego vehicle collision danger point, and point h on second vehicle 2 is the fourth collision danger point corresponding to the second ego vehicle collision danger point b. If the fifth distance between point g and point f is greater than the fourth distance between point b and point h, or the fifth distance between point g and point f is less than the third offset, point b is determined to be the target collision point of the ego vehicle, and point h is determined to be the target collision point of second vehicle 2.

With the method for displaying ego vehicle according to embodiments of this disclosure, when the second obstacle is determined to be the target obstacle, the fourth distance between the second ego vehicle collision danger point and the second obstacle at the preceding moment and the fifth distance between the ego vehicle and the second obstacle at the current moment are computed; a third offset is determined based on the fourth distance; and it is determined whether the fourth distance, the fifth distance, and the third offset meet the third preset condition, such that when the fourth distance, the fifth distance, and the third offset meet the third preset condition, it is enabled to determine the target collision point of the ego vehicle based on the third ego vehicle collision danger point of the ego vehicle, and determine the target collision point of the target obstacle based on the third collision danger point of the second obstacle; or that when the fourth distance, the fifth distance, and the third offset do not meet the third preset condition, it is enabled to determine the target collision point of the target obstacle based on the fourth collision danger point, and determine the target collision point of the ego vehicle based on the second ego vehicle collision danger point. Therefore, smooth switching between different target collision points of the same target obstacle is enabled, which therefore enables to guarantee subsequent smooth transition of target observation angles of view, and then avoid a sudden change in the observation angle of view.

As shown in FIG. 9, based on the embodiment shown in FIG. 2, step 203 may include steps as follows.

Step 2031, Creating an observation space based on the target observation point and a yaw direction of the ego vehicle

In some embodiments, the target observation point is determined based on the respective target collision points of the ego vehicle and the target obstacle, for which one may specifically refer to related description in the embodiment below, which is not repeated here in embodiments of this disclosure.

In some examples, the yaw direction of the ego vehicle may be obtained through onboard sensor or localization system. For example, the yaw direction of the ego vehicle is obtained through a gyroscope.

In some embodiments, a planar Cartesian coordinate system may be created taking the target observation point as the origin, the yaw direction of the ego vehicle as a positive direction of the vertical axis (denoted by Y-axis); and a circle may be formed taking the target observation point as the center of the circle, and a preset length as the radius. That is, the space encircled by the circle is the observation space. Thus, the target observation angle of view may be determined in the observation space.

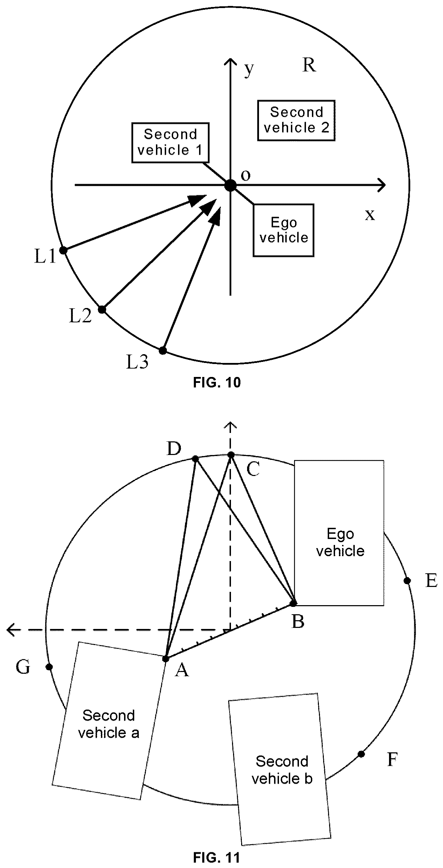

Illustratively, FIG. 10 is a diagram of an observation space according to an illustrative embodiment of this disclosure. As shown in FIG. 10, point O represents the target observation point, and circle R is formed taking point O as the center of the circle, the preset length as the radius. That is, the space encircled by circle R is the observation space, which thereby enables to determine the target observation angle of view on the circumference of circle R.

Step 2032, Determining a plurality of fixed observation angles of view in the observation space and a to-be-selected observation angle of view

In some embodiments, the observation space may be divided into a plurality of fixed observation angles of view, the angle between the respective fixed observation angles of view and an adjacent fixed observation angle of view may be identical or may differ.

Illustratively, take 16 fixed observation angles of view as an example. As shown in FIG. 10, if the observation space is divided into 16 fixed observation angles of view, angles spanning adjacent fixed observation angles of view may each be of 22.5 degree. Starting from the direction of X-axis, one fixed observation angle of view is determined every 22.5 degree on the circumference of the circle O, to obtain a total of 16 fixed observation angles of view (such as L1, L2, and L3), wherein 4 fixed observation angles of view are along directions of the coordinate axes. As the center point of the observation space is at the target observation point, the fixed observation angles of view each face the target observation point.

In some embodiments, step 2032 may specifically include steps (a) to (d) as follows.

(a) Determining a first field-of-view performance parameter of the respective fixed observation angles of view

The first fixed observation angle of view is a fixed observation angle of view having a maximum first field-of-view performance parameter in the plurality of fixed observation angles of view.

In some examples, a first field-of-view performance parameter may include visibility and a viewing angle. Visibility is configured for representing a proportion of a number of points not blocked and observable at an observation angle in a total number of points. The viewing angle is configured for representing a field of view observable at the observation angle.

In some embodiments, the respective target collision points of the target obstacle and the ego vehicle may be connected with each other by a connecting line segment, on which a number of (such as 10) sample points are set evenly, each of the sample points is connected to a fixed observation angle of view, and it is detected whether a line connecting each of the sample points to a fixed observation angle of view intersects with the ego vehicle, the target obstacle, or another obstacle. If the line connecting a sample point to the fixed observation angle of view intersects with the ego vehicle, the target obstacle, or another obstacle, it represents that the sample point is blocked from view; or if the line connecting a sample point to the fixed observation angle of view does not intersects with the ego vehicle, the target obstacle, or another obstacle, it represents that the sample point is not blocked from view.

Note that the number of sample points include the respective target collision points of the target obstacle and the ego vehicle, wherein the two target collision points serve as endpoints of the line connecting the two target collision points. When lines connecting the two endpoints in the number of sample points respectively to a fixed observation angle of view intersect with the ego vehicle, the target obstacle, or another obstacle at a respective number of points greater than 1, it represents that the two endpoints are blocked from view; or when the lines connecting the two endpoints respectively to the fixed observation angle of view intersect with the ego vehicle, the target obstacle, or another obstacle at 1 point, it represents that the two endpoints are not blocked from view.

In some examples, visibility is denoted by t, t=m1/m2, wherein m1 represents the number of sample points not blocked, and m2 represents the total number of the sample points.

Illustratively, as shown in FIG. 11, the respective target collision points of the target obstacle and the ego vehicle are denoted by A and B, respectively, the observation space includes fixed observation angles C, D, E, F, and G, and there are obstacles around the ego vehicle, i.e.: second vehicle 1 and second vehicle 2. A and B are connected, and 10 sample points are set evenly on segment AB. For fixed observation angle of view D, as each of the lines connecting the 10 sample points on segment AB respectively to fixed observation angle of view D does not intersect with the ego vehicle, the target obstacle, or another obstacle, no sample point on segment AB is blocked from view, and thereby fixed observation angle of view D is of visibility t=ml/m2, wherein as m1 and m2 are identical, t=1. Similar to fixed observation angle of view D, fixed observation angle of view C is not blocked by any second vehicle.

For fixed observation angle of view E, as each of the lines connecting the 10 sample points on segment AB respectively to fixed observation angle of view D intersects with the ego vehicle, all the sample points on segment AB are blocked from view, and thereby fixed observation angle of view E is of visibility t=m1/m2, wherein as m1=0, t=0. Similar to fixed observation angle of view E, fixed observation angle of view F and fixed observation angle of view G each are blocked by a second vehicle.

In some examples, as shown in FIG. 11, in the planar Cartesian coordinate system, for fixed observation angle of view D, fixed observation angle of view D is connected respectively to the target collision point A and B, to obtain a triangle with fixed observation angle of view D as the vertex, and segment AB as the base, wherein the angle ∠ADB of the vertex of the triangle, i.e., the angle between AD and BD, is determined to be the viewing angle of fixed observation angle of view D, which thereby enables to compute the angle ∠ADB of the vertex by vector dot product. The viewing angle of fixed observation angle of view C may also be computed in the mode as described above, which is not repeated here in embodiments of this disclosure.

(b) Determining a first fixed observation angle of view based on the first field-of-view performance parameter of the respective fixed observation angles of view

In some embodiments, the first field-of-view performance parameter of the respective fixed observation angles of view is compared, and the fixed observation angle of view having the maximum first field-of-view performance parameter in the plurality of fixed observation angles of view is selected to be the first fixed observation angle of view.

Illustratively, as shown in FIG. 11, assume that the plurality of fixed observation angles of view include C, D, ..., and G. As fixed observation angles of view E, F, and G are clearly blocked by a second vehicles or the ego vehicle, the respective viewing angles of fixed observation angles of view E, F, and G are 0. The viewing angle of fixed observation angle of view C is ∠ACB, and the viewing angle of fixed observation angle of view D is ∠ADB. If ∠ACB is greater than ∠ADB, fixed observation angle of view C is selected to be the first fixed observation angle of view, or if ∠ACB is less than ∠ADB, fixed observation angle of view D is selected to be the first fixed observation angle of view.

(c) Determining a plurality of alternative observation angles of view based on the first fixed observation angle of view

The plurality of alternative observation angles of view are a plurality of adjacent observation angles of view obtained by rotating the first fixed observation angle of view in a preset direction.

In some examples, in the observation space, taking the target observation point as the center of the circle, the first fixed observation angle of view may be rotated by a fixed angle clockwise and / or counterclockwise, and a preset number of fixed observation angles of view adjacent to the first fixed observation angle of view in fixed observation angles of view other than the first fixed observation angle of view may be selected to be a plurality of alternative observation angles of view. A plurality of alternative observation angles of view may include the first fixed observation angle of view. Alternatively, a plurality of alternative observation angles of view may not include the first fixed observation angle of view.

(d) Determining a historical observation angle of view at a second moment, wherein the historical observation angle of view indicates an observation angle of view in observing a preceding target observation point at the second moment, wherein the second moment is a preceding moment of a current moment

In some embodiments, as the historical observation angle of view is the observation angle of view configured for observing the preceding target observation point at the preceding moment of the current moment, the historical observation angle of view is known, and therefore may be obtained directly from a memory based directly on information on a timestamp of the historical observation angle of view.

(e) Determining the to-be-selected observation angle of view based on the historical observation angle of view and a target control quantity

The target control quantity is an increment between the historical observation angle of view and a target alternative observation angle of view, wherein the target alternative observation angle of view is an alternative observation angle of view having a maximum first field-of-view performance parameter in the plurality of alternative observation angles of view.

In some embodiments, first, the respective first field-of-view performance parameters of the plurality of alternative observation angles of view may be computed and then compared, and the alternative observation angle of view having the maximum first field-of-view performance parameter in the plurality of alternative observation angles of view may be selected to be the target alternative observation angle of view.

In some embodiments, a position increment and a heading angle increment between the historical observation angle of view and the target alternative observation angle of view are computed, the position increment and the heading angle increment are set to be the target control quantity; the to-be-selected observation angle of view may be obtained by adding the target control quantity to the historical observation angle of view.

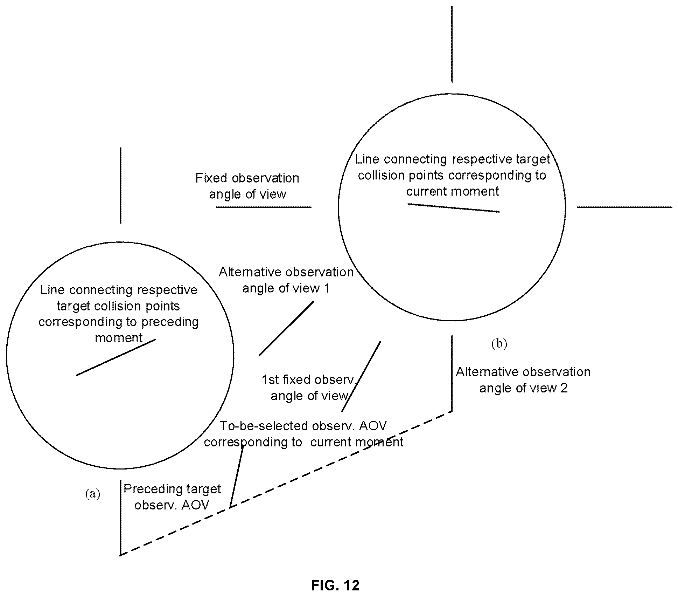

Illustratively, FIG. 12, (a) shows a line connecting the respective target collision points of the ego vehicle and the target obstacle corresponding to the preceding moment and a preceding target observation angle of view (i.e., the historical observation angle of view), and FIG. 12, (b) shows the line connecting the respective target collision points of the ego vehicle and the target obstacle corresponding to the current moment, the first fixed observation angle of view, other fixed observation angles of view, alternative observation angle of view 1, and alternative observation angle of view 2. The plurality of alternative observation angles of view include the first fixed observation angle of view, alternative observation angle of view 1, and alternative observation angle of view 2; by computing respective viewing angles of the first fixed observation angle of view, alternative observation angle of view 1, and alternative observation angle of view 2, alternative observation angle of view 2 of the maximum viewing angle is set to be the target observation angle of view; the target control quantity is determined based on the target observation angle of view and the historical observation angle of view; and the to-be-selected observation angle of view corresponding to the current moment as shown in FIG. 12 is obtained based on the target control quantity and the historical observation angle of view.

In the embodiment as described above, by computing the first field-of-view performance parameter of the respective fixed observation angles of view, selecting the fixed observation angle of view having the maximum first field-of-view performance parameter to be the first fixed observation angle of view, and determining the plurality of alternative observation angles of view based on the fixed observation angle of view, as it is enabled to determine the to-be-selected observation angle of view based on the historical observation angle of view and the target control quantity between the historical observation angle of view and the target alternative observation angle of view, it is enabled to smooth the observation angle of view between different moments, thereby reducing view angle jitter in switching of the observation angle of view.

Step 2033, Determining the target observation angle of view based on the plurality of fixed observation angles of view and / or the to-be-selected observation angle of view

In some embodiments, there is no valid target observation angle of view corresponding to the preceding moment, in which case there is no to-be-selected observation angle of view. Therefore, the target observation angle of view is determined in the plurality of fixed observation angles of view. Alternatively, there is a valid target observation angle of view corresponding to the preceding moment, in which case there is a to-be-selected observation angle of view. Therefore, the target observation angle of view is determined based on the plurality of fixed observation angles of view and the to-be-selected observation angle of view.

In determining the target observation angle of view based on the plurality of fixed observation angles of view and the to-be-selected observation angle of view, it is preferred to set the to-be-selected observation angle of view to be the target observation angle of view, for which one may specifically refer to elaboration in an embodiment below, which is not repeated here in embodiments of this disclosure.

With the method for displaying ego vehicle according to embodiments of this disclosure, it is enabled to construct the observation space based on the target observation point and the yaw direction of the ego vehicle, determine the plurality of fixed observation angles of view in the observation space and the to-be-selected observation angle of view, and then determine the target observation angle of view based on the plurality of fixed observation angles of view and / or the to-be-selected observation angle of view. With the solution, the observation space is constructed through the target observation point and the yaw direction of the ego vehicle, which enables to ensure that an onboard system always focuses on a key area strongly correlated with a direction in which the ego vehicle drives, which enables to avoid an observation blind spot caused by the vehicle making a turn, and it is enabled to select an optimal observation angle of view to be the target observation angle of view based on the plurality of fixed observation angles of view and the to-be-selected observation angle of view, which thereby enables to observe the ego vehicle and the target obstacle through the optimal observation angle of view.

In some embodiments, when there is no valid target observation angle of view corresponding to the preceding moment, step 2033 may specifically include steps of: determining a second fixed observation angle of view based on a first field-of-view performance parameter of the respective fixed observation angles of view, wherein the second fixed observation angle of view is an observation angle of view having a maximum first field-of-view performance parameter in the plurality of fixed observation angles of view; and determining the target observation angle of view based on the second fixed observation angle of view.

In some examples, the first field-of-view performance parameter of the respective fixed observation angles of view is compared, the maximum first field-of-view performance parameter of the plurality of first field-of-view performance parameters is selected, and the observation angle of view having the maximum first field-of-view performance parameter in the plurality of observation angles of view is determined to be the second fixed observation angle of view; that is, the second fixed observation angle of view is the target observation angle of view.

With the method for displaying ego vehicle according to embodiments of this disclosure, as it is enabled to compute the first field-of-view performance parameter of the respective fixed observation angles of view, and select the second fixed observation angle of view having the maximum first field-of-view performance parameter from the plurality of fixed observation angles of view, it is enabled to determine the second fixed observation angle of view to be the target observation angle of view, which thereby enables to avoid a view angle blind spot problem due to selection of an observation angle of view of an overly low viewing angle and / or overly low visibility, and then enables to observe the ego vehicle and the target obstacle with the maximum field of view.

In some embodiments, when there is a valid target observation angle of view corresponding to the preceding moment, step 2033 may specifically include steps as follows.

Step 2033a, Determining first field-of-view performance parameters of the plurality of fixed observation angles of view and a second field-of-view performance parameter of the to-be-selected observation angle of view

In some examples, the second field-of-view performance parameter and the first field-of-view performance parameters as described above may be identical or may differ. For example, the second field-of-view performance parameter and the first field-of-view performance parameters each include a viewing angle and visibility; as another example, the second field-of-view performance parameter includes a viewing angle and visibility, whereas a first field-of-view performance parameter includes a viewing angle or visibility.

For the second field-of-view performance parameter, one may refer to elaboration of a first field-of-view performance parameter in an embodiment as described above, which is not repeated here in embodiments of this disclosure.

Step 2033b, In response to the second field-of-view performance parameter being greater than or equal to a preset threshold, determining the target observation angle of view based on the to-be-selected observation angle of view

In some examples, the preset threshold as described above may include a preset visibility threshold and a preset viewing angle threshold. When visibility of the to-be-selected observation angle of view is greater than or equal to the preset visibility threshold and the viewing angle of the to-be-selected observation angle of view is greater than or equal to the preset viewing angle threshold, the to-be-selected observation angle of view is determined to be the target observation angle of view.

Illustratively, when visibility of the to-be-selected observation angle of view as shown in FIG. 12 is greater than or equal to the preset visibility threshold and the viewing angle of the to-be-selected observation angle of view is greater than or equal to the preset viewing angle threshold, the to-be-selected observation angle of view is determined to be the target observation angle of view.

Step 2033c, In response to the second field-of-view performance parameter being less than a preset threshold, determining the target observation angle of view based on the plurality of fixed observation angles of view

In some examples, when visibility of the to-be-selected observation angle of view is less than the preset visibility threshold and the viewing angle of the to-be-selected observation angle of view is less than the preset viewing angle threshold, the target observation angle of view is determined based on the plurality of fixed observation angles of view.

In some embodiments, in step 2033c, the determining the target observation angle of view based on the plurality of fixed observation angles of view may specifically include steps as follows.

(1) Determining a second fixed observation angle of view based on a first field-of-view performance parameter of the respective fixed observation angles of view

The second fixed observation angle of view is an observation angle of view having a maximum first field-of-view performance parameter in the plurality of fixed observation angles of view.

For the second fixed observation angle of view and the first field-of-view performance parameter, one may refer to elaboration of an embodiment as described above, which is not repeated here in embodiments of this disclosure.

(2) Determining a plurality of alternative observation angles of view based on the second fixed observation angle of view

The plurality of alternative observation angles of view are a plurality of adjacent observation angles of view obtained by rotating the first fixed observation angle of view in a preset direction.

In some examples, in the observation space, taking the target observation point as the center of the circle, the second fixed observation angle of view may be rotated by a fixed angle clockwise and / or counterclockwise, and a preset number of fixed observation angles of view adjacent to the second fixed observation angle of view in fixed observation angles of view other than the second fixed observation angle of view may be selected to be a plurality of alternative observation angles of view. A plurality of alternative observation angles of view may include the second fixed observation angle of view. Alternatively, a plurality of alternative observation angles of view may not include the second fixed observation angle of view.

(3) Determining third field-of-view performance parameters of the alternative observation angles of view;

In some examples, a third field-of-view performance parameter differs from a first field-of-view performance parameter. For example, the third field-of-view performance parameter is the viewing angle, and the first field-of-view performance parameter is visibility; as another example, the third field-of-view performance parameter is visibility, and the first field-of-view performance parameter is the viewing angle. For a third field-of-view performance parameter, one may refer to elaboration in an embodiment as described above, which is not repeated here in embodiments of this disclosure.

(4) Determining, based on the third field-of-view performance parameters, the target observation angle of view in the plurality of alternative observation angles of view

The target observation angle of view is an alternative observation angle of view having a maximum third field-of-view performance parameter in the plurality of alternative observation angles of view.

In some examples, when the third field-of-view performance parameters are viewing angles, the viewing angles of the alternative observation angles of view are compared, the alternative observation angle of view having the maximum third field-of-view performance parameter in the plurality of alternative observation angles of view is selected, and is determined to be the target observation angle of view.

With the method for displaying ego vehicle according to embodiments of this disclosure, the first field-of-view performance parameter of the respective fixed observation angles of view is computed, the fixed observation angle of view having the maximum first field-of-view performance parameter is selected to be the second fixed observation angle of view, the plurality of alternative observation angles of view are determined based on the second fixed observation angle of view, and then based on the third field-of-view performance parameters of the plurality of alternative observation angles of view, the alternative observation angle of view having the maximum third field-of-view performance parameter in the plurality of alternative observation angles of view is selected to be the target observation angle of view. With the solution, when a condition is not met by the to-be-selected observation angle of view, it is enabled to select an alternative observation angle of view having the maximum viewing angle and the maximum visibility to be the target observation angle of view, which therefore enables to subsequently observe the ego vehicle and the obstacle at an optimal observation angle of view, which therefore enables to lower the risk of a blind spot between the ego vehicle and the obstacle to the greatest extent.

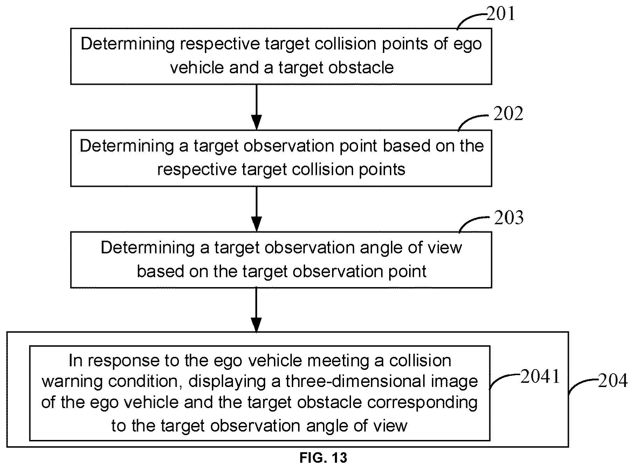

As shown in FIG. 13, based on the embodiment shown in FIG. 2, step 204 may include a step as follows.

Step 2041, In response to the ego vehicle meeting a collision warning condition, displaying a three-dimensional image of the ego vehicle and the target obstacle corresponding to the target observation angle of view

In some examples, the collision warning condition may include that the distance between the ego vehicle and a target collision object is less than a safe distance threshold, and the speed of the ego vehicle is less than or equal to a preset speed at the gear position D or the gear position R. For example, the safe distance threshold may be 0.9 meters, and the preset speed may be 10 km/h.

In some other embodiments, in case the ego vehicle does not meet the collision warning condition, the three-dimensional image of the ego vehicle and the target obstacle corresponding to the target observation angle of view is hidden.

With the method for displaying ego vehicle according to embodiments of this disclosure, in case the ego vehicle meets the collision warning condition, as it is enabled to display the three-dimensional image of the ego vehicle and the target obstacle corresponding to the target observation angle of view, on one hand, when there is a risk of collision of the ego vehicle, it is enabled to facilitate, through the displayed three-dimensional image of the ego vehicle and the target obstacle corresponding to the target observation angle of view, intuitively observing the relative position between the ego vehicle and the target obstacle by the driver, to adjust the ego vehicle in time to avoid the risk of collision with the target obstacle; and on the other hand, it is enabled to avoid distracting the driver by displaying a visual image in case the ego vehicle does not meet the collision warning condition, which thus improves driving safety of the ego vehicle.

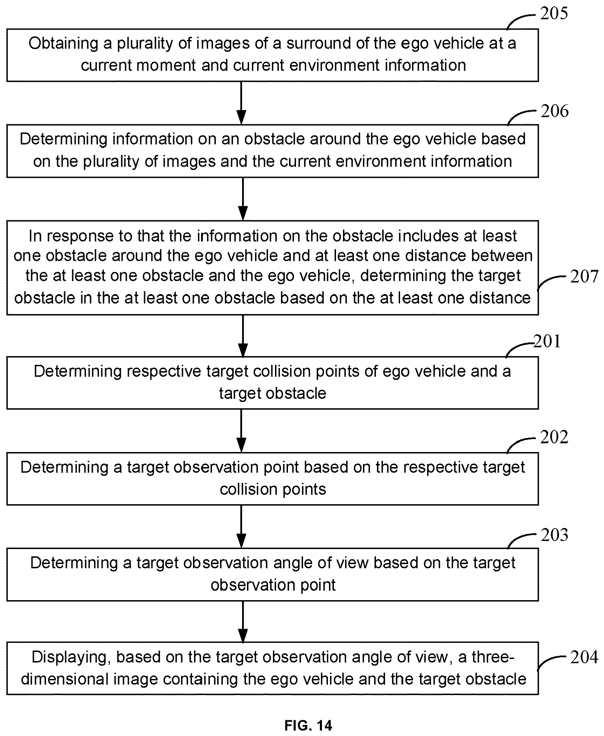

As shown in FIG. 14, based on the embodiment shown in FIG. 2, the method for displaying ego vehicle according to embodiments of this disclosure may further include, before step 201, steps as follows.

Step 205, Obtaining a plurality of images of a surround of the ego vehicle at a current moment and current environment information

In some embodiments, image information on the surround of the vehicle is acquired in real time through a plurality of cameras located at different positions external to the ego vehicle to obtain a plurality of images, wherein the plurality of images are acquired by the plurality of cameras at the same moment. As the plurality of cameras are located at different positions external to the ego vehicle, the plurality of images are of different angles of view.

Illustratively, the plurality of cameras as described above may include a front camera, a surround view camera, or a side camera, etc.

In some examples, the plurality of images as described above may each include a road, a building, a special road sign, a pedestrian, or a vehicle, etc., around the ego vehicle.

In some embodiments, information on the current environment around the ego vehicle is obtained through the point cloud data acquired in real time by an ultrasound sensor, light detection and ranging LIDAR, or millimeter-wave radar, etc., of the ego vehicle. The current environment information may include information such as the distance of the ego vehicle to an obstacle around the ego vehicle, a speed, a position, a pose, etc.

Step 206, Determining information on an obstacle around the ego vehicle based on the plurality of images and the current environment information

In some embodiments, the information on the obstacle as described above may include the number of obstacles, a type and a position of the obstacle, the distance of the obstacle to the ego vehicle, etc.

In some examples, target detection may be performed on the plurality of images using a deep learning model, to identify a plurality of objects such as a road, a building, a special road sign, a pedestrian, a vehicle, etc.; a pedestrian and a vehicle in the plurality of objects may be selected to be obstacles, which thereby enables to determine the number of obstacles and the type of an obstacle; and then, the distance, the speed, the direction, etc., of the respective obstacle relative to the ego vehicle may be determined combining the current environment information.

Step 207, In response to that the information on the obstacle includes at least one obstacle around the ego vehicle and at least one distance between the at least one obstacle and the ego vehicle, determining the target obstacle in the at least one obstacle based on the at least one distance

The target obstacle is an obstacle closest to the ego vehicle in the at least one obstacle.

In some examples, any distance in the at least one distance is compared, to determine the minimum distance, and then, the obstacle corresponding to the minimum distance is determined to be the target obstacle.

While the ego vehicle drives, as the driving direction and the position of the ego vehicle change, the at least one obstacle around the ego vehicle and the distance to the respective obstacle may also change, and thereby, the determined target obstacle closest to the ego vehicle changes accordingly, that is, the target obstacle is updated in real time, which thus implements tracking the ego vehicle and the closest obstacle in real time.

With the method for displaying ego vehicle according to embodiments of this disclosure, it is enabled to determine the information on an obstacle around the ego vehicle based on the plurality of images and the current environment information obtained in real time, and in response to that the information on the obstacle includes at least one obstacle around the ego vehicle and the distance between the respective obstacle and the ego vehicle, select the target obstacle closest to the ego vehicle in the at least one obstacle, which therefore enables to determine the target obstacle closest to the ego vehicle in real time, and thereby avoid the risk of collision of the ego vehicle by tracking the ego vehicle and the closest obstacle in real time.

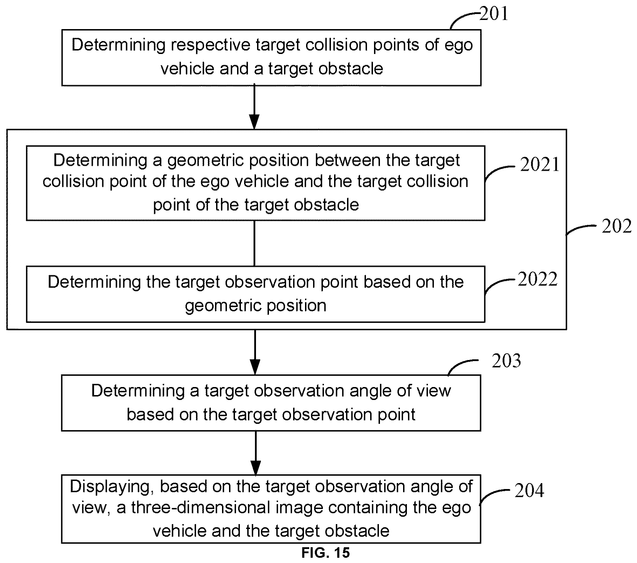

As shown in FIG. 15, based on the embodiment shown in FIG. 2, step 202 may include steps as follows.

Step 2021, Determining a geometric position between the target collision point of the ego vehicle and the target collision point of the target obstacle

In some examples, the target collision point of the ego vehicle and the target collision point of the target obstacle may be connected to obtain a line segment, and then, a position on the segment, such as a position at a midpoint of the segment or a position at 1/3 of the segment, is selected to be the geometric position.

While the ego vehicle drives, a spatiotemporal relation between the ego vehicle and the target obstacle is updated in real time. Therefore, the target collision point of the ego vehicle and the target collision point of the target obstacle may change, that is, the determined geometric position between the target collision point of the ego vehicle and the target collision point of the target obstacle may also change accordingly.

Step 2022, Determining the target observation point based on the geometric position.

In some examples, the geometric position may directly be determined to be the target observation point; or the geometric position may be adjusted combining speed of the ego vehicle and / the target obstacle, and the adjusted position is determined to be the target observation point.

With the method for displaying ego vehicle according to embodiments of this disclosure, it is enabled to determine the target observation point based on the determined geometric position between the target collision point of the ego vehicle and the target collision point of the target obstacle. Therefore, through the target observation point, it is enabled to know in advance a possible potential collision point between the ego vehicle and the target obstacle, which thereby enables to subsequently adjust the observation angle of view based on the target observation point to focus on a perception blind spot of the ego vehicle.

Illustrative apparatus

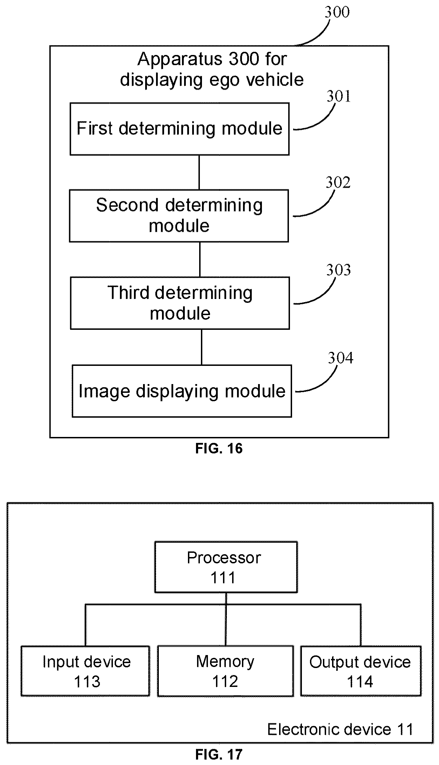

FIG. 16 is a diagram of a structure of an apparatus for displaying ego vehicle according to an illustrative embodiment of this disclosure. The apparatus for displaying ego vehicle may be set in an electronic device such as a terminal device, a server, etc., or on an object such as a vehicle, etc., to perform the method for displaying ego vehicle according to any one embodiment of this disclosure as described above.

As shown in FIG. 16, the apparatus 300 may include:

a first determining module 301, which may be configured for determining respective target collision points of ego vehicle and a target obstacle;

a second determining module 302, which may be configured for determining a target observation point based on the respective target collision points;

a third determining module 303, which may be configured for determining a target observation angle of view based on the target observation point; and

an image displaying module 304, which may be configured for displaying, based on the target observation angle of view, a three-dimensional image containing the ego vehicle and the target obstacle.

In a possible implementation, the first determining module may specifically be configured for: determining a first collision danger point of a first obstacle and a first ego vehicle collision danger point of the ego vehicle corresponding to a current moment, wherein the first obstacle is an obstacle closest to the ego vehicle in a plurality of obstacles at the current moment; determining a second ego vehicle collision danger point of the ego vehicle and a second collision danger point of a second obstacle corresponding to a first moment, wherein the first moment is a preceding moment of the current moment, and the second obstacle is an obstacle closest to the ego vehicle in a plurality of obstacles at the first moment; and determining, based on the first collision danger point and the first ego vehicle collision danger point and / or the second collision danger point and the second ego vehicle collision danger point, the respective target collision points of the ego vehicle and the target obstacle.

In a possible implementation, the first determining module may specifically be configured for: in response to the first obstacle being the second obstacle, determining a first distance and a second distance, wherein the first distance is a distance between the second ego vehicle collision danger point and the second obstacle at the preceding moment, and the second distance is a distance between the first ego vehicle collision danger point and the first obstacle at the current moment;

determining a first offset based on the first distance; and

in response to the first distance, the second distance, and the first offset meeting a first preset condition, determining the target collision point of the target obstacle based on the first collision danger point, and determining the target collision point of the ego vehicle based on the first ego vehicle collision danger point, or

in response to the first distance, the second distance, and the first offset not meeting a first preset condition, determining the target collision point of the target obstacle based on the second collision danger point, and determining the target collision point of the ego vehicle based on the second ego vehicle collision danger point.

In a possible implementation, the first determining module may specifically be configured for: in response to the first obstacle being not the second obstacle, determining a second distance and a third distance, wherein the second distance is a distance between the ego vehicle and the first obstacle at the current moment, and the third distance is a distance between the ego vehicle and the second obstacle at the current moment;

determining a second offset based on the third distance; and
in response to the second distance, the third distance, and the second offset meeting a second preset condition, determining the target collision point of the target obstacle based on the first collision danger point, and determining the target collision point of the ego vehicle based on the first ego vehicle collision danger point, or
in response to the second distance, the third distance, and the second offset not meeting a second preset condition, determining the respective target collision points based on the second obstacle and the ego vehicle, wherein the second obstacle is the target obstacle.

In a possible implementation, the first determining module may specifically be configured for: determining a fourth distance and a fifth distance, wherein the fourth distance is a distance between the second ego vehicle collision danger point and the second obstacle at the preceding moment, and the fifth distance is the distance between the ego vehicle and the second obstacle at the current moment;

determining a third offset based on the fourth distance;
in response to the fourth distance, the fifth distance, and the third offset meeting a third preset condition, determining a third ego vehicle collision danger point of the ego vehicle and a third collision danger point of the second obstacle at the current moment; and
determining the target collision point of the target obstacle based on the third collision danger point, and determining the target collision point of the ego vehicle based on the third ego vehicle collision danger point.

In a possible implementation, the first determining module may specifically be configured for: in response to the fourth distance, the fifth distance, and the third offset not meeting the third preset condition, determining a fourth collision danger point of the second obstacle corresponding to the second ego vehicle collision danger point at the current moment; and
determining the target collision point of the target obstacle based on the fourth collision danger point, and determining the target collision point of the ego vehicle based on the second ego vehicle collision danger point.

In a possible implementation, the third determining module may specifically be configured for: creating an observation space based on the target observation point and a yaw direction of the ego vehicle; determining a plurality of fixed observation angles of view in the observation space and a to-be-selected observation angle of view; and determining the target observation angle of view based on the plurality of fixed observation angles of view and / or the to-be-selected observation angle of view.

In a possible implementation, the third determining module may specifically be configured for: determining a first field-of-view performance parameter of the respective fixed observation angles of view; determining a first fixed observation angle of view based on the first field-of-view performance parameter of the respective fixed observation angles of view, wherein the first fixed observation angle of view is a fixed observation angle of view having a maximum first field-of-view performance parameter in the plurality of fixed observation angles of view; determining a plurality of alternative observation angles of view based on the first fixed observation angle of view, wherein the plurality of alternative observation angles of view are a plurality of adjacent observation angles of view obtained by rotating the first fixed observation angle of view in a preset direction; determining a historical observation angle of view at a second moment, wherein the historical observation angle of view indicates an observation angle of view in observing a preceding target observation point at the second moment, wherein the second moment is a preceding moment of a current moment; and determining the to-be-selected observation angle of view based on the historical observation angle of view and a target control quantity, wherein the target control quantity is an increment between the historical observation angle of view and a target alternative observation angle of view, wherein the target alternative observation angle of view is an alternative observation angle of view having a maximum first field-of-view performance parameter in the plurality of alternative observation angles of view.

In a possible implementation, the third determining module may specifically be configured for: determining first field-of-view performance parameters of the plurality of fixed observation angles of view and a second field-of-view performance parameter of the to-be-selected observation angle of view; and

in response to the second field-of-view performance parameter being greater than or equal to a preset threshold, determining the target observation angle of view based on the to-be-selected observation angle of view, or in response to the second field-of-view performance parameter being less than a preset threshold, determining the target observation angle of view based on the plurality of fixed observation angles of view.

In a possible implementation, the third determining module may specifically be configured for: determining a second fixed observation angle of view based on a first field-of-view performance parameter of the respective fixed observation angles of view, wherein the second fixed observation angle of view is an observation angle of view having a maximum first field-of-view performance parameter in the plurality of fixed observation angles of view; determining a plurality of alternative observation angles of view based on the second fixed observation angle of view, wherein the plurality of alternative observation angles of view are a plurality of adjacent observation angles of view obtained by rotating the first fixed observation angle of view in a preset direction; determining third field-of-view performance parameters of the alternative observation angles of view; determining, based on the third field-of-view performance parameters, the target observation angle of view in the plurality of alternative observation angles of view, the target observation angle of view being an alternative observation angle of view having a maximum third field-of-view performance parameter in the plurality of alternative observation angles of view.

In a possible implementation, the third determining module may specifically be configured for: determining a second fixed observation angle of view based on a first field-of-view performance parameter of the respective fixed observation angles of view, wherein the second fixed observation angle of view is an observation angle of view having a maximum first field-of-view performance parameter in the plurality of fixed observation angles of view; and determining the target observation angle of view based on the second fixed observation angle of view.

In a possible implementation, the image displaying module may be configured for: in response to the ego vehicle meeting a collision warning condition, displaying a three-dimensional image of the ego vehicle and the target obstacle corresponding to the target observation angle of view.

In a possible implementation, as described above the apparatus may further include:

a first obtaining module, which may be configured for obtaining a plurality of images of a surround of the ego vehicle at a current moment and current environment information;
a fourth determining module, which may be configured for determining information on an obstacle around the ego vehicle based on the plurality of images and the current environment information; and
a fifth determining module, which may be configured for, in response to that the information on the obstacle includes at least one obstacle around the ego vehicle and at least one distance between the at least one obstacle and the ego vehicle, determining the target obstacle in the at least one obstacle based on the at least one distance, wherein the target obstacle is an obstacle closest to the ego vehicle in the at least one obstacle.

In a possible implementation, the second determining module may specifically be configured for: determining a geometric position between the target collision point of the ego vehicle and the target collision point of the target obstacle; and determining the target observation point based on the geometric position.

For beneficial technical effects corresponding to the illustrative embodiments of this apparatus, one may refer to the respective beneficial technical effects in the "Illustrative method" section described above, which are not repeated here.

<u>Illustrative electronic device</u>

FIG. 17 is a diagram of a structure of an electronic device according to an illustrative embodiment of this disclosure, the electronic device including at least one processor 111 and a memory 112.

The processor 111 may be a central processing unit (CPU) or another form of processing unit having a data processing capability and/or an instruction execution capability, and may control other components in the electronic device 11 to implement desired functions.

The memory 112 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, flash memory, etc. One or more computer program instructions may be stored on the computer readable storage medium. The processor 111 may execute one or more of the program instructions to implement the method for displaying ego vehicle according to the various embodiments of this disclosure that are described above, and/or other desired functions.

In an example, the electronic device 11 may further include an input device 113 and an output device 114. These components are connected to each other through a bus system and/or another form of connection mechanism (not shown).

The input device 113 may include various types of sensors, including, but not limited to: a ranging sensor, configured for detecting a distance between a target object and a vehicle; and an image sensor, configured for acquiring information on an environment of the vehicle. In some examples, the input device may further include: a pressure sensor, configured for detecting seat pressure, to determine presence and a position of a passenger; a temperature sensor, configured for monitoring temperature inside a cabin; a humidity sensor, configured for monitoring humidity inside the cabin, to assist in regulating in-vehicle environment; an air quality sensor, configured for monitoring in-vehicle air quality, such as carbon dioxide, volatile organic compounds (VOCs), etc.; a light sensor, configured for detecting light intensity inside and outside the vehicle; an acceleration sensor, configured for detecting change in the vehicle's acceleration; a distance sensor, configured for measuring a distance between the vehicle and another object; a touchscreen sensor, configured for interaction with the vehicle's infotainment system; biometric sensors, such as for fingerprint identification, face identification, etc.; a heart rate monitor, configured for monitoring a driver's heart rate; a sound sensor, configured for voice recognition and interaction, to implement voice control functionality; a seat sensor, configured for monitoring seat usage, such as a seat occupancy state, passenger build, etc.; and wireless communication sensors, such as Bluetooth, Wi-Fi, etc., configured for connection with an intelligent device, to implement data transmission and remote control. In addition to the examples given above, the input device may also include more or less sensors, which is not elaborated here.

The output device 114 may output various information or signals to other hardware or devices, wherein the other hardware or devices may include a display, an onboard audio, a seat, a car window, a steering wheel, etc., as well as a communication network and a remote output device connected thereto, etc. The display may include a plurality of different display screens such as a driver's display screen, a passenger's display screen, a backseat display screen, etc. The onboard audio may include a plurality of speakers provided at different positions in the vehicle cabin, wherein different display screens or speakers may each operate independently.

Of course, for simplicity, FIG. 17 shows only some of components in the electronic device 11 that are related to this disclosure, and components such as a bus and an input/output interface are omitted. In addition, according to specific application situations, the electronic device 11 may further include any other appropriate components.

Illustrative computer program product and computer-readable storage medium

In addition to the foregoing method and device, embodiments of this disclosure may also relate to a computer program product, which includes computer program instructions. When the instructions are run by a processor, the processor is enabled to perform the steps, of the method for displaying ego vehicle according to the embodiments of this disclosure, that are described in the "Illustrative method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, embodiments of this disclosure may further relate to a computer readable storage medium, which stores computer program instructions. When the computer program instructions are run by a processor, the processor is enabled to perform the steps, of the method for displaying ego vehicle according to the embodiments of this disclosure, that are described in the "Illustrative method" section as described above.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, effects, etc., mentioned in this disclosure are merely examples but are not for limitation, and it cannot be considered that these advantages, superiorities, effects, etc., are necessary for each embodiment of this disclosure. Moreover, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this disclosure. In this way, if these modifications and variations of this disclosure fall within the scope of the claims and equivalent technologies of the claims of this disclosure, this disclosure also intends to include these modifications and variations.

**Claims**

**1.** A method for displaying ego vehicle, including:

determining (201) respective target collision points of ego vehicle and a target obstacle;
determining (202) a target observation point based on the respective target collision points;
determining (203) a target observation angle of view based on the target observation point; and
displaying (204), based on the target observation angle of view, a three-dimensional image containing the ego vehicle and the target obstacle.

**2.** The method according to claim 1, wherein the determining (201) respective target collision points of ego vehicle and a target obstacle includes:

determining (2011) a first collision danger point of a first obstacle and a first ego vehicle collision danger point of the ego vehicle corresponding to a current moment, wherein the first obstacle is an obstacle closest to the ego vehicle in a plurality of obstacles at the current moment;
determining (2012) a second ego vehicle collision danger point of the ego vehicle and a second collision danger point of a second obstacle corresponding to a first moment, wherein the first moment is a preceding moment of the current moment, and the second obstacle is an obstacle closest to the ego vehicle in a plurality of obstacles at the first moment; and
determining (2013), based on the first collision danger point and the first ego vehicle collision danger point and / or the second collision danger point and the second ego vehicle collision danger point, the respective target collision points of the ego vehicle and the target obstacle.

**3.** The method according to claim 2, wherein the determining (2013), based on the first collision danger point and the first ego vehicle collision danger point and / or the second collision danger point and the second ego vehicle collision danger point, the respective target collision points of the ego vehicle and the target obstacle includes:

in response to the first obstacle being the second obstacle, determining (2013a) a first distance and a second distance, wherein the first distance is a distance between the second ego vehicle collision danger point and the second obstacle at the preceding moment, and the second distance is a distance between the first ego vehicle collision danger point and the first obstacle at the current moment;
determining (2013b) a first offset based on the first distance; and
in response to the first distance, the second distance, and the first offset meeting a first preset condition, determining (2013c) the target collision point of the target obstacle based on the first collision danger point, and determining the target collision point of the ego vehicle based on the first ego vehicle collision danger point, or
in response to the first distance, the second distance, and the first offset not meeting a first preset condition, determining (2013d) the target collision point of the target obstacle based on the second collision danger point, and determining the target collision point of the ego vehicle based on the second ego vehicle collision danger point.

**4.** The method according to claim 2, wherein the determining, based on the first collision danger point and the first ego vehicle collision danger point and / or the second collision danger point and the second ego vehicle collision danger point, the respective target collision points of the ego vehicle and the target obstacle includes:

in response to the first obstacle being not the second obstacle, determining (2013e) a second distance and a third distance, wherein the second distance is a distance between the ego vehicle and the first obstacle at the current moment, and the third distance is a distance between the ego vehicle and the second obstacle at the current moment;
determining (2013f) a second offset based on the third distance; and
in response to the second distance, the third distance, and the second offset meeting a second preset condition, determining (2013g) the target collision point of the target obstacle based on the first collision danger point, and determining the target collision point of the ego vehicle based on the first ego vehicle collision danger point, or

in response to the second distance, the third distance, and the second offset not meeting a second preset condition, determining (2013h) the respective target collision points based on the second obstacle and the ego vehicle, wherein the second obstacle is the target obstacle.

5. The method according to claim 4, wherein the determining the respective target collision points based on the second obstacle and the ego vehicle includes:

determining a fourth distance and a fifth distance, wherein the fourth distance is a distance between the second ego vehicle collision danger point and the second obstacle at the preceding moment, and the fifth distance is the distance between the ego vehicle and the second obstacle at the current moment;
determining a third offset based on the fourth distance;
in response to the fourth distance, the fifth distance, and the third offset meeting a third preset condition, determining a third ego vehicle collision danger point of the ego vehicle and a third collision danger point of the second obstacle at the current moment; and
determining the target collision point of the target obstacle based on the third collision danger point, and determining the target collision point of the ego vehicle based on the third ego vehicle collision danger point.

6. The method according to claim 1, wherein the determining (203) a target observation angle of view based on the target observation point includes:

creating (2031) an observation space based on the target observation point and a yaw direction of the ego vehicle;
determining (2032) a plurality of fixed observation angles of view in the observation space and a to-be-selected observation angle of view; and
determining (2033) the target observation angle of view based on the plurality of fixed observation angles of view and / or the to-be-selected observation angle of view.

7. The method according to claim 6, wherein the determining a plurality of fixed observation angles of view in the observation space and a to-be-selected observation angle of view includes:

determining a first field-of-view performance parameter of the respective fixed observation angles of view;
determining a first fixed observation angle of view based on the first field-of-view performance parameter of the respective fixed observation angles of view, wherein the first fixed observation angle of view is a fixed observation angle of view having a maximum first field-of-view performance parameter in the plurality of fixed observation angles of view;
determining a plurality of alternative observation angles of view based on the first fixed observation angle of view, wherein the plurality of alternative observation angles of view are a plurality of adjacent observation angles of view obtained by rotating the first fixed observation angle of view in a preset direction;
determining a historical observation angle of view at a second moment, wherein the historical observation angle of view indicates an observation angle of view in observing a preceding target observation point at the second moment, wherein the second moment is a preceding moment of a current moment; and
determining the to-be-selected observation angle of view based on the historical observation angle of view and a target control quantity, wherein the target control quantity is an increment between the historical observation angle of view and a target alternative observation angle of view, wherein the target alternative observation angle of view is an alternative observation angle of view having a maximum first field-of-view performance parameter in the plurality of alternative observation angles of view.

8. The method according to claim 6, wherein the determining the target observation angle of view based on the plurality of fixed observation angles of view and / or the to-be-selected observation angle of view includes:

determining first field-of-view performance parameters of the plurality of fixed observation angles of view and a second field-of-view performance parameter of the to-be-selected observation angle of view; and
in response to the second field-of-view performance parameter being greater than or equal to a preset threshold, determining the target observation angle of view based on the to-be-selected observation angle of view, or
in response to the second field-of-view performance parameter being less than a preset threshold, determining the target observation angle of view based on the plurality of fixed observation angles of view.

9. The method according to claim 6, wherein the determining the target observation angle of view based on the plurality of fixed observation angles of view and / or the to-be-selected observation angle of view includes:

determining a second fixed observation angle of view based on a first field-of-view performance parameter of the respective fixed observation angles of view, wherein the second fixed observation angle of view is an observation angle of view having a maximum first field-of-view performance parameter in the plurality of fixed observation angles of view; and

determining the target observation angle of view based on the second fixed observation angle of view.

10. The method according to claim 1, wherein the displaying (204), based on the target observation angle of view, a three-dimensional image containing the ego vehicle and the target obstacle includes:
in response to the ego vehicle meeting a collision warning condition, displaying (2041) a three-dimensional image of the ego vehicle and the target obstacle corresponding to the target observation angle of view.

11. The method according to claim 1, further including: before the determining (201) respective target collision points of ego vehicle and a target obstacle,

obtaining (205) a plurality of images of a surround of the ego vehicle at a current moment and current environment information;
determining (206) information on an obstacle around the ego vehicle based on the plurality of images and the current environment information; and
in response to that the information on the obstacle includes at least one obstacle around the ego vehicle and at least one distance between the at least one obstacle and the ego vehicle, determining (207) the target obstacle in the at least one obstacle based on the at least one distance, wherein the target obstacle is an obstacle closest to the ego vehicle in the at least one obstacle.

12. The method according to claim 1, wherein the determining (202) a target observation point based on the respective target collision points includes:

determining (2021) a geometric position between the target collision point of the ego vehicle and the target collision point of the target obstacle; and
determining (2022) the target observation point based on the geometric position.

13. An apparatus (300) for displaying ego vehicle, including:

a first determining module (301), configured for determining respective target collision points of ego vehicle and a target obstacle;
a second determining module (302), configured for determining a target observation point based on the respective target collision points;
a third determining module (303), configured for determining a target observation angle of view based on the target observation point; and
an image displaying module (304), configured for displaying, based on the target observation angle of view, a three-dimensional image containing the ego vehicle and the target obstacle.

14. A computer-readable storage medium, storing a computer program for implementing the method for displaying ego vehicle according to any one of claims 1 to 12.

15. An electronic device (11), including:

a processor (111); and
a memory (112) configured for storing processor-executable instructions, wherein
the processor (111) is configured for reading and executing the processor-executable instructions in the memory (112) to implement the method for displaying ego vehicle according to any one of claims 1 to 12.

Data acquiring module 101

Three-dimensional modeling module 104

View angle adjusting module 102

Rendering module 105

Display interaction module 103

FIG. 1

Determining respective target collision points of
ego vehicle and a target obstacle — 201

Determining a target observation point based on the
respective target collision points — 202

Determining a target observation angle of view
based on the target observation point — 203

Displaying, based on the target observation angle
of view, a three-dimensional image containing the
ego vehicle and the target obstacle — 204

FIG. 2

Determining a first collision danger point of a first obstacle and a first ego vehicle collision danger point of the ego vehicle corresponding to a current moment — 2011

Determining a second ego vehicle collision danger point of the ego vehicle and a second collision danger point of a second obstacle corresponding to a first moment — 2012

— 201

Determining, based on the first collision danger point and the first ego vehicle collision danger point and / or the second collision danger point and the second ego vehicle collision danger point, the respective target collision points of the ego vehicle and the target obstacle — 2013

Determining a target observation point based on the respective target collision points — 202

Determining a target observation angle of view based on the target observation point — 203

Displaying, based on the target observation angle of view, a three-dimensional image containing the ego vehicle and the target obstacle — 204

FIG. 3

FIG. 4

FIG. 5

Determining a first collision danger point of a first obstacle and a first ego vehicle collision danger point of the ego vehicle corresponding to a current moment ⌐2011

Determining a second ego vehicle collision danger point of the ego vehicle and a second collision danger point of a second obstacle corresponding to a first moment ⌐2012

⌐2013

In response to the first obstacle being the second obstacle, determining a first distance and a second distance ⌐2013a

Determining a first offset based on the first distance ⌐2013b

⌐201

⌐2013c

In response to the first distance, the second distance, and the first offset meeting a first preset condition, determining the target collision point of the target obstacle based on the first collision danger point, and determining the target collision point of the ego vehicle based on the first ego vehicle collision danger point

⌐2013d

In response to the first distance, the second distance, and the first offset not meeting a first preset condition, determining the target collision point of the target obstacle based on the second collision danger point, and determining the target collision point of the ego vehicle based on the second ego vehicle collision danger point

⌐202

Determining a target observation point based on the respective target collision points

⌐203

Determining a target observation angle of view based on the target observation point

⌐204

Displaying, based on the target observation angle of view, a three-dimensional image containing the ego vehicle and the target obstacle

FIG. 6

Determining a first collision danger point of a first obstacle and a first ego vehicle collision danger point of the ego vehicle corresponding to a current moment ⟋2011

Determining a second ego vehicle collision danger point of the ego vehicle and a second collision danger point of a second obstacle corresponding to a first moment ⟋2012

⟋2013

In response to the first obstacle being not the second obstacle, determining a second distance and a third distance ⟋2013e

Determining a second offset based on the third distance ⟋2013f

⟋201

⟋2013g

In response to the second distance, the third distance, and the second offset meeting a second preset condition, determining the target collision point of the target obstacle based on the first collision danger point, and determining the target collision point of the ego vehicle based on the first ego vehicle collision danger point

⟋2013h

In response to the second distance, the third distance, and the second offset not meeting a second preset condition, determining the respective target collision points based on the second obstacle and the ego vehicle

Determining a target observation point based on the respective target collision points ⟋202

Determining a target observation angle of view based on the target observation point ⟋203

Displaying, based on the target observation angle of view, a three-dimensional image containing the ego vehicle and the target obstacle ⟋204

FIG. 7

**FIG. 8**

**FIG. 9**

Determining respective target collision points of ego vehicle and a target obstacle — 201

Determining a target observation point based on the respective target collision points — 202

Creating an observation space based on the target observation point and a yaw direction of the ego vehicle — 2031

Determining a plurality of fixed observation angles of view in the observation space and a to-be-selected observation angle of view — 2032

Determining the target observation angle of view based on the plurality of fixed observation angles of view and / or the to-be-selected observation angle of view — 2033

— 203

Displaying, based on the target observation angle of view, a three-dimensional image containing the ego vehicle and the target obstacle — 204

**FIG. 10**

**FIG. 11**

Fixed observation
angle of view

Line connecting respective target
collision points corresponding to
current moment

Line connecting respective
target collision points
corresponding to preceding
moment

Alternative observation
angle of view 1

(b)

Alternative observation
angle of view 2

1st fixed observ.
angle of view

To-be-selected observ. AOV
corresponding to current moment

(a)

Preceding target
observ. AOV

FIG. 12

Determining respective target collision points of ego vehicle and a target obstacle ⌐201

↓

Determining a target observation point based on the respective target collision points ⌐202

↓

Determining a target observation angle of view based on the target observation point ⌐203

↓

In response to the ego vehicle meeting a collision warning condition, displaying a three-dimensional image of the ego vehicle and the target obstacle corresponding to the target observation angle of view ⌐2041 ⌐204

FIG. 13

Obtaining a plurality of images of a surround of the ego vehicle at a current moment and current environment information ⌐205

Determining information on an obstacle around the ego vehicle based on the plurality of images and the current environment information ⌐206

In response to that the information on the obstacle includes at least one obstacle around the ego vehicle and at least one distance between the at least one obstacle and the ego vehicle, determining the target obstacle in the at least one obstacle based on the at least one distance ⌐207

Determining respective target collision points of ego vehicle and a target obstacle ⌐201

Determining a target observation point based on the respective target collision points ⌐202

Determining a target observation angle of view based on the target observation point ⌐203

Displaying, based on the target observation angle of view, a three-dimensional image containing the ego vehicle and the target obstacle ⌐204

FIG. 14

```
                                                          ┌─201
┌─────────────────────────────────────────────────┐
│  Determining respective target collision points of ego │
│          vehicle and a target obstacle                 │
└─────────────────────────────────────────────────┘
                          │
                          ▼
┌─────────────────────────────────────────────────────┐
│  ┌───────────────────────────────────────────┐       │
│  │  Determining a geometric position between the target │─2021 │
│  │  collision point of the ego vehicle and the target collision │
│  │           point of the target obstacle           │       │
│  └───────────────────────────────────────────┘       │─202
│                        │                              │
│  ┌───────────────────────────────────────────┐       │
│  │  Determining the target observation point based on the │─2022 │
│  │              geometric position                   │       │
│  └───────────────────────────────────────────┘       │
└─────────────────────────────────────────────────────┘
                          │
                          ▼                    ┌─203
┌─────────────────────────────────────────────────┐
│  Determining a target observation angle of view   │
│     based on the target observation point         │
└─────────────────────────────────────────────────┘
                          │
                          ▼
┌─────────────────────────────────────────────────┐
│  Displaying, based on the target observation angle of │─204
│  view, a three-dimensional image containing the ego  │
│        vehicle and the target obstacle            │
└─────────────────────────────────────────────────┘
```

FIG. 15

300

## Apparatus 300 for displaying ego vehicle

First determining module — 301

Second determining module — 302

Third determining module — 303

Image displaying module — 304

**FIG. 16**

Processor
111

Input device
113

Memory
112

Output device
114

Electronic device 11

**FIG. 17**